(19)

**Europäisches Patentamt**
**European Patent Office**
**Office européen des brevets**

(11) **EP 4 422 409 B1**

(12) **EUROPEAN PATENT SPECIFICATION**

(45) Date of publication and mention
of the grant of the patent:
**29.01.2025 Bulletin 2025/05**

(21) Application number: **23715961.1**

(22) Date of filing: **03.04.2023**

(51) International Patent Classification (IPC):
*A23C 20/02* (2025.01)

(52) Cooperative Patent Classification (CPC):
**A23C 20/02**

(86) International application number:
**PCT/IB2023/053352**

(87) International publication number:
**WO 2023/199163 (19.10.2023 Gazette 2023/42)**

(54) **SURFACE-RIPENED VEGAN FOOD PRODUCT AND METHOD OF MAKING THEREOF**

OBERFLÄCHENGEREIFTES VEGANES NAHRUNGSMITTEL UND VERFAHREN ZU SEINER HERSTELLUNG

PRODUIT ALIMENTAIRE VÉGÉTALIEN MÛRI EN SURFACE ET SON PROCÉDÉ DE FABRICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.04.2022 EP 22168069**

(43) Date of publication of application:
**04.09.2024 Bulletin 2024/36**

(73) Proprietor: **Eidgenössisches Departement für Wirtschaft,
Bildung und Forschung (WBF) Agroscope
3003 Bern (CH)**

(72) Inventors:
 • **STOFFERS, Helena**
   **3510 Konolfingen (CH)**
 • **BACHMANN, Hans-Peter**
   **3658 Merlingen (CH)**
 • **SCHMIDT, Remo**
   **3012 Bern (CH)**

(74) Representative: **E. Blum & Co. AG
Franklinturm
Hofwiesenstrasse 349
8050 Zürich (CH)**

(56) References cited:
  EP-A1- 2 368 532       EP-A1- 3 366 144
  WO-A1-98/34493        US-A- 2 641 545

 • DATABASE GNPD [online] MINTEL; 10 October 2019 (2019-10-10), ANONYMOUS: "Joséphine Plant-Based Cheese", XP055633870, retrieved from https://www.gnpd. com/sinatra/recordpage/6926571/ Database accession no. 6926571
 • ANONYMOUS: "AGED CHICKPEA CHEESE", 12 April 2021 (2021-04-12), pages 1 - 6, XP055944172, Retrieved from the Internet <URL:https://web.archive. org/web/20210412195737/https://avegtastefroma toz.com/aged-chickpea-cheese/> [retrieved on 20220719]
 • ANONYMOUS: "Chef Skye’s Vegan Muenster", 18 December 2018 (2018-12-18), www.modernistpantry.com, pages 1 - 13, XP055723800, Retrieved from the Internet <URL:https://blog.modernistpantry. com/recipes/chef-skyes-vegan-muenster/> [retrieved on 20200819]
 • DATABASE GNPD [online] MINTEL; 10 October 2019 (2019-10-10), ANONYMOUS: "Joséphine Plant-Based Cheese", XP055633870, retrieved from https://www.gnpd. com/sinatra/recordpage/6926571/ Database accession no. 6926571

EP 4 422 409 B1

**Description**

<u>Technical Field</u>

The present invention relates to a surface-ripened vegan food product and a method for producing a surface-ripened vegan food product. The present invention further relates to the use of a sheet-like porous material in the manufacture of a surface-ripened vegan food product.

<u>Background Art</u>

A variety of vegan food products are known in the art. For example, a recipe for aged chickpea cheese is available from https://avegtastefromatoz.com/aged-chickpea-cheese/ (accessed on 24 Feb 2023). In this recipe, probiotic capsules are mixed with the cheese paste prior to fermentation. Accordingly, in contrast to surface-ripening, the chickpea cheese is ripened from the inside.

Whereas methods of surface-ripening are well known for non-vegan food products such as cheese or meat, e.g. smear-ripened cheese, surface ripening of vegan food products has been very limited until now.

During surface ripening, food products, such as cheese, generally ripen from their outside surface inward to the interior paste. Ripening occurs through the metabolism of microorganisms such as bacteria, yeasts, and/or moulds that are present on the surface of a precursor food product.

US 2641545 describes production of a soft surface cured cheese, i.e. a non-vegan dairy product, using a porous fabric. The fabric remains on the cheese until it is removed by the consumer. The fabric thus facilitates removal of a mould pad that is formed during ripening.

Surface-ripening of vegan food products has previously been achieved using a white mould culture. In white mould ripening, the white mould forms a rind on the surface of the vegan food product and thereby aids in shaping of the product. For white mould ripening, it is sufficient to regularly invert the food product during ripening.

Further, EP 3366144 relates to a method for preparation of a vegan cheese, including ripening of a curd. Such ripening may be achieved by spraying *Penicillium candidum* on the cheese curd.

However, due to the relatively soft surface texture of many vegan foods when compared to traditional, non-vegan foods, mechanically more demanding types of surface-ripening still represent a challenge for vegan food products. The relatively soft surface texture of many vegan food products is due to differences in the manufacturing process that are required for vegan food products compared to traditional, non-vegan food products. An example of such a mechanically demanding surface-ripening process is smear-ripening.

Smear-ripening is a well-known method in the field of traditional cheese ripening. Traditional smear-ripened cheeses are characterized by a complex microflora, which develops on the surface during ripening. The development of the microflora contributes to a red-orange or brownish pigmented surface, which is characteristic for traditional smear-ripened cheese varieties.

In a conventional process for smear-ripening of cheese, a freshly brined cheese wheel is frequently brushed (smeared) with a smear liquid. Usually the cheese is brushed 3-5 times per week until growth of the microorganisms within the smear layer has started. Then, the frequency of brushing can be reduced stepwise to 1-2 times per week until the ripening process is complete. Frequent brushing is typically required in order to prevent growth of undesired moulds.

Such a process for smear-ripening is either labour-intensive in case of manual brushing or capital-intensive in case brushing is performed by robots. Moreover, frequent brushing usually leads to an at least partial destruction of the primary structure of the cheese, which results from the press mould.

However, vegan food products have only a thin rind or no rind at all and are therefore more susceptible to destruction of the surface during mechanically demanding surface-ripening processes such as smear-ripening. Hence, in case of vegan food products, the destruction or partial destruction of the surface due to brushing is even more pronounced.

Suitable ripening media for surface ripening of traditional food products such as cheese are known in the art and may also be used for surface ripening of vegan food products, such as cheese analogues or meat analogues.

For example, a smear liquid used for smear-ripening of cheese typically contains salty water or a whey liquid solution and may or may not contain commercially available microorganisms, e.g. mixed cultures, so called surface starters.

Usually, the salty water contains 2-10% (w/w) sodium chloride.

Examples of surface starter organisms are *Debaryomyces hansenii, Geotrichum candidum, Brevibacterium linens, Brevibacterium casei, Staphylococcus equorum, Microbacterium gubbeenense, Arthrobacter* spp., *Corynebacterium casei* and mixtures thereof.

Ripening occurs in a climate-controlled environment at a temperature of 8°C to 20°C and a high relative humidity.

Usually the relative humidity is at least 90% RH.

Irrespective of whether or not such microorganisms are present in the smear liquid, the resulting smear in general contains a mixture of microorganisms. Such microorganisms in general are (1) yeasts, (2) Gram-positive bacteria, (3) Gram-negative bacteria, (4) moulds and mixtures thereof.

Usually, in smear liquids one or more of the following microorganisms are found:

- yeasts such as *Debaryomyces hansenii, Kluyveromyces marxianus, Kluyveromyces lactis, Geotrichum candidum* and mixtures thereof;

- Gram-positive bacteria such as coryneform bacteria, *Micrococcaceae* and mixtures thereof, wherein

   examples of coryneform bacteria are *Brevibacterium linens, Brevibacterium aurantiacum* and *Arthrobacter sp.* and mixtures thereof; and

   examples of *Micrococcaceae* are *Micrococcus sp.,* non-pathogenic *Staphylococcus sp.* and mixtures thereof,

- Gram-negative bacteria such as *Enterobacteriaceae, Halomonadaceae, Alcaligenaceae, Caulobacteraceae, Moraxellaceae, Oceanospirillaceae, Pseudoalteromonadaceae, Pseudomonadaceae, Vibrionaceae, Xanthomonadaceae,* in particular *Enterobacteriaceae,* and mixtures thereof; and

- Moulds such as *Fusarium domesticum.*

Selected moulds such as *Bisifusarium domesticum* can have a positive effect on the smear by reducing stickiness. Many moulds, however, lead to undesirable discolouration or can even form mycotoxins.

Additional microorganisms may be present in the smear liquid. Their use for commercial starter cultures is possible after stringent evaluation of their safety for use in food products, e.g. by full genome sequencing followed by sequence analysis.

The composition of the smear typically changes during ripening.

For example, the properties of smear from the surface of a Roquefort-type cheese have been described by Hostin et al. [Hostin S and Palo V, 1992, Milchwirtsch. Ber. Bundesanst. Wolfpassing Rotholz No. 111: 106-109, Eigenschaften der Schmiere der Käseoberfläche der Roquefortart, International food information service, database accession no. FS-1993-01-P-0075].

Moreover, it is typically desired to pack vegan food products in a packaging material for post-ripening storage, distribution and/or sales. Such packaging material is typically air-tight. It is known from traditional smear-ripened cheese (dairy product; non-vegan), that during storage in such a packaging material, the metabolism and/or composition of the microflora changes. During storage in a packaging material, in particular air-tight packaging material, the smear surface may become sticky and an off-odour may develop. Such a sticky surface and/or off-odourous surface is also referred to as a defective or faulty smear. The off-odour that may escape the packaging material upon opening is also referred to as off-flavouring.

The group of substances that contribute to the off-flavour comprises ammonia and low molecular weight sulphur compounds such as methanethiol ($CH_3SH$), hydrogen sulphide ($H_2S$), dimethyl sulphide (DMS), dimethyl disulphide (DMDS), dimethyl trisulphide (DMTS) and carbonyl sulphide (herein collectively referred to as "off-flavour compounds"). Moreover, sulphur compounds may interact with each other and with other compounds in the food product, generating other volatile off-flavour compounds.

Disclosure of the Invention

Hence, it is a general object of the invention to provide a method for producing a surface-ripened vegan food product such as a cheese analogue or a meat analogue and a method for making thereof. In addition, the invention relates to the use of a sheet-like porous material in a method for manufacturing a surface-ripened vegan food product such as a cheese analogue or a meat analogue. The invention is set out in the appended set of claims.

Unless otherwise stated, the following **definitions** shall apply in this specification:

As used herein, the term "a", "an", "the" and similar terms used in the context of the present invention (especially in the context of the claims) are to be construed to cover both the singular and plural unless otherwise indicated herein or clearly contradicted by the context.

As used herein, the terms "including", "containing" and "comprising" are used herein in their open, non-limiting sense. It is understood that the various embodiments, preferences and ranges may be combined at will.

The term "fabric" is known in the field and particularly relates to textile materials made from fibres. The term "fabric" also encompasses the terms "textile fabric", "textile sheet material", "fibre aggregate", "textile surface", "textile structure", "textile surface structure".

The term "woven fabric" is known in the field and relates to a fabric formed by weaving. Woven fabrics are often created on a loom, and made of many threads woven on a warp and a weft. A woven fabric is made by interlacing two or more threads at right angles to one another.

The term "knitted fabric" is known in the field and relates to a fabric made (i.e. knitted) of thread systems by forming stitches on a knitting machine. Knitted fabrics are commonly used, for example, to make underwear or bedclothes.

The term "non-woven fabric" is known in the field and relates to sheet or web structures bonded together by entangling fiber or filaments (and by perforating films) mechanically, thermally or chemically. The term is used to denote fabrics that are neither knitted nor woven.

As used herein, the term "biodegradable" or "biodegradability" relates to the "cradle to cradle" (C2C) standard. C2C certified compostability requirements are specified for example in EN 13432 (alternatively ISO 17088, ISO 18606 or ASTM D6400). However, to meet C2C certified compostability requirements, the fabric must be appropriate for home composting, and must not be limited to industrial composting facilities.

Now, in order to implement these and still further objects of the invention, which will become more readily apparent as the description proceeds, a surface-ripened vegan food product and a manufacturing method for surface-ripened vegan food products are disclosed.

In a **first aspect,** the invention relates to a method for producing a surface-ripened vegan food product, such as a surface-ripened cheese analogue or a surface-ripened meat analogue.

The inventive method for producing a surface-ripened vegan food product is manifested by the steps

a) providing a vegan precursor food product and applying an envelope and subsequently applying microorganisms thereon,
said envelope

- being in direct physical contact with the surface of the vegan precursor food product, and
- being permeable for metabolites produced by the microorganisms and for the microorganisms themselves and for components of the vegan precursor food product and for gaseous elements, in particular surrounding air;

b) ripening the vegan precursor food product within the envelope; and
c) removing the envelope to thereby obtain the vegan food product.

The envelope is removed after ripening and prior to sale or consumption, preferably prior to sale.

As is known for traditional methods for surface-ripening of food products, the microorganisms may be applied either actively or passively.

Actively applying microorganisms means that a defined mix of microorganisms, so called mixed cultures or surface starters, are applied on the precursor food product. Such mixed cultures or surface starters are commercially available.

Passively applying microorganisms means that a certain mix of microorganisms, which is generally present at the production site, starts growing on the precursor food product and thereby initiates the ripening process, without the need to actively apply a defined mix of microorganisms. Thus, the mix of microorganisms that grows on the precursor food product is dependent on the production site. Consequently the particular organoleptic properties of the resulting surface-ripened food product may also depend on the production site.

**In** the context of the present invention, first the envelope is applied on the vegan precursor food product, e.g. the vegan precursor food product is wrapped in the envelope, and, subsequently, microorganisms are applied on the enveloped precursor food product.

Application of microorganisms - actively and / or passively - allows growing of the microorganisms on the envelope, thereby allowing surface-ripening of the vegan precursor food product.

The envelope may be applied on the vegan precursor food product in various manners. In one embodiment, the envelope is closed (sealed) by sewing the ends of the envelope together after wrapping the vegan precursor food product in the envelope.

In another embodiment, the envelope is closed (sealed) by welding the ends of the envelope together after wrapping the vegan precursor food product in the envelope.

In another embodiment, the envelope is closed (sealed) by tying the ends of the envelope together after wrapping the vegan precursor food product in the envelope, e.g. using a string or cord.

In yet another embodiment, the envelope is closed (sealed) by taping the ends of the envelope together using glue, wax or resin after the vegan precursor food product has been wrapped in the envelope.

In a preferred embodiment, after step c), the thus obtained vegan food product is packaged for transport and/or sale in a subsequent step d).

A large variety of vegan foods that are suitable as vegan precursor food products in the context of the present invention are known (e.g. Grossmann et al., Trends in Food Science and Technology 118 (2021):207-229). The skilled person is able to select and combine the various components described herein to obtain suitable vegan precursor food products from which surface-ripened vegan food products can be produced according to the invention.

The vegan food product and the vegan precursor food product, each contain water and at least one of the following components:

- a plant, algae, bacteria or fungus derived polysaccharide component;
- a plant, algae, bacteria or fungus derived protein component;

and optionally in addition a plant, algae, bacteria or fungus derived fat component.

Thus, at least one of the polysaccharide component or protein component are present in the vegan food product and its precursor. Hence, a composition comprising only water and fat component, but no polysaccharide component or protein component, is not suitable as a vegan precursor food product for surface ripening.

In embodiments, both the precursor and the surface-ripened vegan food product contain 25 - 75% (w/w), preferably 35 - 60% (w/w), water.

In embodiments, both the precursor and the surface-ripened vegan food product contain 0 - 75% (w/w), preferably 5 - 75%, more preferably 10 - 50% (w/w), of the plant, algae, bacteria or fungus derived polysaccharide component.

In embodiments, both the precursor and the surface-ripened vegan food product contain 0 - 75% (w/w), preferably, 5 - 75%, more preferably 10 - 50% (w/w), of the plant, algae, bacteria or fungus derived protein component.

In embodiments, both the precursor and the surface-ripened vegan food product contain 0 - 50% (w/w), preferably 5 - 50%, more preferably 10 - 40% (w/w), of the plant, algae, bacteria or fungus derived fat component.

The combination of polysaccharide component, protein component and fat component adds up to at least 25% (w/w), preferably up to at least 40% (w/w), of the vegan food product or its precursor.

Water is present in a quantity such that all components of the vegan precursor food product and vegan food product add up to 100% (w/w).

For example, a suitable vegan food product and / or its precursor may contain 25% of the polysaccharide component and 75% water. In another example, a suitable vegan food product and / or its precursor may contain 25% of the protein component and 75% water.

The water content typically decreases during ripening and thus the water content of the surface-ripened vegan food product is generally lower than the water content of the precursor. The difference in the water content between the surface-ripened vegan food product and the respective precursor varies, but is typically in the range of 3 - 30% (w/w). The decrease in water content typically results in a firmer texture of the vegan food product. The decrease in water content is typically lower than in case surface ripening is performed without an envelope. A decrease of the water content in the range of 3 - 30% is considered beneficial since it aids in shaping of the vegan food product during ripening. However, it is also considered beneficial that the decrease in water content is lower compared to surface ripening without an envelope since a larger loss of water typically leads to a less aromatic product and a reduced yield (i.e. lower mass of the food product).

It is considered beneficial that the inventive ripening method may impact the shape of the surface-ripened vegan food product (cf. e.g. examples 4, 5, 10 and 11).

In certain embodiments, a paste-like mass, e.g. a vegan precursor food product having a dynamic viscosity ($\eta$) in the range of between 500 to 100'000 Millipascalseconds (mPa·s), preferably 2'000 to 20'000 mPa·s, may be filled into the envelope and be surface-ripened according to the inventive method. In particular, the inventive ripening method may result in a surface-ripened vegan food product having a firmer texture than the corresponding precursor food product, such that it is solid or semi-solid at 20°C, i.e. the surface-ripened vegan food product so obtained can be cut with a knife (i.e. it is cuttable) and / or is spreadable. Accordingly, the envelope may impact the shape of the surface-ripened vegan food product. In particular, the inventive method thus enables surface-ripening of paste-like vegan precursor food products, e.g. having a dynamic viscosity in the range of between 500 to 100'000 mPa·s, preferably 2'000 to 20'000 mPa·s.

Methods of measuring dynamic viscosity $\eta$ are well-known in the art and are suitable in the context of the inventive method described herein. Typically, the dynamic viscosity is measured using a rotational viscometer. Further, viscosity measurement is regulated in various DIN standards, in particular DIN 1319 (Fundamentals of Measurement), DIN 1342 (Viscosity) and DIN 53019 (Viscosimetry - Measurement of viscosities and flow curves with rotational viscometers with standard geometry).

Typically, the inventive method yields surface-ripened vegan food products having a thin rind. In particular, the rind is thick enough so that viscous or paste-like masses retain their shape. On the other hand, the rind is typically not too thick so that there is no negative mouthfeel during consumption. However, as the skilled person understands, the thickness of the rind can vary depending on the vegan precursor food product used for surface-ripening. Typically, a rind as described herein has a mean thickness of between 0.05 mm to 0.2 mm, preferably 0.05 mm to 0.1 mm.

It is considered beneficial that the colour of such rind (after unwrapping from the envelope) is typically more homogeneous than the colour of a rind that may be present on a vegan food product that was ripened without an envelope. In certain embodiments, the inventive method yields surface-ripened vegan food products having a thin rind although, typically, no rind was present on the corresponding vegan precursor food product.

Further, it is considered beneficial that the surface of a vegan food product that was surface-ripened according to the inventive method is typically less sticky compared to the surface of the corresponding vegan precursor food product. It is considered a further advantage that the surface of a vegan food product that was surface-ripened according to the inventive method may have a reduced water content compared to the surface of the corresponding vegan precursor food product.

Preferably, the vegan food product is a cheese analogue or a meat analogue, more preferably a cheese analogue.

Preferably, said method is a method for producing a smear-ripened vegan food product, such as a smear-ripened cheese analogue or a smear-ripened meat analogue, more preferably a smear-ripened cheese analogue.

It was surprisingly found that the process described above enables the manufacturing of a surface-ripened vegan food product.

An advantage of the method when used for smear-ripening is that regular brushing with a smear liquid is not required. Instead, immersing the vegan precursor food product in a smear liquid, optionally containing surface starter organisms, preferably directly after step (a), and afterwards keeping the precursor food product humid is sufficient. However, an additional advantage of the inventive method is that it enables mechanically demanding ripening processes for surface-ripening of vegan food products, thus brushing is possible within the scope of the method. Furthermore, the envelope aids in shaping of the vegan food product during ripening.

Moreover, a surface-ripened vegan food product obtained according to the present invention generally has beneficial properties upon storage in a packaging material. This shall be explained in more detail below.

**Surface-ripened:** The term "surface-ripened" is known in the field of traditional cheese production and is used herein in an analogous way. During traditional surface ripening, food products, such as cheese, generally ripen from their outside surface inward to the interior paste, via microorganisms such as bacteria, yeasts, and/or moulds that are present on the surface of a precursor food product. Said microorganisms generally metabolize organic acids, such as lactic acid, that are present in the precursor food product. Such organic acids are typically present either as a result of fermentation or because of the addition of acidity regulators.

A typical example of surface-ripening is smear-ripening. In smear-ripening, the precursor food product is typically frequently brushed (smeared) with a smear liquid containing microorganisms, such as bacteria, yeasts, moulds and mixtures thereof. Traditional surface-ripened food products, such as smear-ripened cheese, are characterized by the ripening method. For example, a smear-ripened cheese is characterized by a red-orange coloured surface. This red-orange coloured surface typically harbours a complex mixture of microorganisms.

In addition, surface-ripening results in characteristic organoleptic properties of the food product, such as a particularly aromatic taste. Hence the characteristic properties of a surface-ripened food product are a consequence of the method by which it was produced.

The skilled person is aware of the fact that, although being distinct from the organoleptic properties of the food product prior to surface-ripening, organoleptic properties of a surface-ripened food product are dependent on the particular food product and its production site.

Furthermore, the surface-ripening process generally impacts the texture of the vegan food product which results in different characteristics of the surface-ripened product compared to its precursor prior to ripening. The skilled person is aware that the texture of the food product after ripening depends on a complex interplay between different parameters, particularly the water content (decreases during ripening), the change of the pH value (typically increases during ripening) and the degree of proteolysis, each of which may change during ripening. As is known in the field, each of these parameters depends on the specific ripening conditions used (e.g. ripening time, relative humidity, temperature and microorganisms) and the composition of the vegan precursor food product.

By implementing the inventive method, the characteristic ripening process is now applicable to vegan precursor food products to thereby obtain surface-ripened, particularly smear-ripened, vegan food products.

**Polysaccharide component:** The term "polysaccharide" is known in the field and relates to polymeric carbohydrates composed of monosaccharide units bound together by glycosidic linkages, either linear or branched. In the context of the present invention, the polysaccharide component may be any polysaccharide suitable for human consumption that is derived from plants, algae, bacteria or fungi. A large variety of plant, algae, bacteria or fungus derived polysaccharide components are known in the field of vegan food products and are also suitable for the present invention.

Advantageously, the plant, algae, bacteria or fungus derived polysaccharide component is a root or tuber starch, grain starch or algae starch.

The root or tuber starch of the invention may be of any root or tuber source. Root or tuber in this context includes the species of potato (*Solanum tuberosum* or Irish potato), sweet potato (*Ipomoea batatas*), manioc (*Manihot esculenta*; tapioca starch), cassava (*Manihot esculenta*, syn. *M. utilissima*), yuca dulce (*M. palmata*, syn. *M. dulcis*), yam (*Dioscorea* spp.), yautia (*Xanthosoma* spp., including *X. sagittifolium*), taro (*Colocasia esculenta*), arracacha (*Arracacoa xanthorrhiza*), arrowroot (*Maranta arundinacea*)\ chufa (*Cyperus esculentus*), sago palm (*Metroxylon* spp.), oca and ullucu (*Oxalis tuberosa* and *Ullucus tuberosus*), yam bean and jicama (*Pachyrxhizus erosus* and *P. angulatus*), mashua (*Tropaeolum tuberosum*) and Jerusalem artichoke and topinambur *(Helianthus tuberosus)*.

Advantageously, the root or tuber starch, grain starch or algae starch used in the present invention is a starch which can be gelatinized by heating in water. Gelatinization of starch is the disruption and subsequent solubilisation of starch granules into dissolved polysaccharide chains, resulting in increased viscosity of the gelatinized starch mixture, relative to the non-gelatinized starch mixture.

In the context of the present invention, starch may be a modified starch, such as a degraded, enzymatically modified or stabilized starch, as long as the modification does not fully preclude gelatinization of the starch. However, advantageously, the starch is a non-modified starch. Advantageously, the starch is a native starch. Non-modified, in this context, means that the starch has not been chemically or enzymatically modified, although it may have been pre-gelatinized. Native starch in this context means a native, granular starch, such as obtained from the root or tuber. The advantage of using a non-modified or native starch is that such starches can be applied label-free in vegan food products.

An example of a grain starch is corn starch.

Examples of algae starch are agar and alginate.

Advantageously, the plant, algae, bacteria or fungus derived polysaccharide component is a root or tuber starch, grain starch or algae starch selected from the group consisting of tapioca starch, potato starch, corn starch, agar, alginate and mixtures thereof.

**Fat component:** The term "fat" is known in the field and relates to esters of fatty acids, in particular to triglycerides, i.e. triple esters of glycerol with fatty acids. In the context of the present invention, the fat component may be any type of fat or oil suitable for human consumption that is derived from plants, algae, bacteria or fungi.

A fat or oil, in the present context, is a composition comprising at least 95% (w/w), preferably at least 98% (w/w), di- and triglycerides, and is preferably a composition comprising essentially only triglycerides, wherein the quantity of diglycerides is less than 2% (w/w), preferably less than 1% (w/w). The difference between a fat and an oil is that a fat is solid at 20 °C, whereas an oil is liquid at this temperature. Liquid in this context means that the viscosity is such that the oil can flow, even though the liquid may be a viscous liquid.

Advantageously, the plant, algae, bacteria or fungus derived fat component is selected from the group consisting of avocado oil, canola oil, cocoa butter, coconut oil, corn oil, palm oil, safflower oil, sesame oil, sunflower oil, rapeseed oil, algae oil, a cashew nut derived fat component, an almond derived fat component, a soybean derived fat component, a lupine derived fat component, a pea-derived fat component, a yeast derived fat component, and mixtures thereof. Advantageously, the fat or oil component has a bland taste, such as for instance sunflower oil, palm oil, corn oil or soybean oil.

**Protein component:** The term "protein" is known in the field. Proteins generally consist of one or more long chains of amino acid residues. As is convenient in the field, the term protein also includes peptides such as polypeptides or oligopeptides. Peptides containing two to twenty amino acid units are typically referred to as oligopeptides whereas peptides containing more than twenty amino acids are typically referred to as polypeptides.

In the context of the present invention, the protein component may be any type protein or peptide suitable for human consumption that is derived from plants, algae, bacteria or fungi.

Preferably, the protein component is selected from the group consisting of a cashew nut derived protein component, an almond derived protein component, a soybean derived protein component, a lupine derived protein component, a pea derived protein component, a corn derived protein component, a potato derived protein component, a wheat derived protein component, an algae derived protein component, a pseudocereal derived protein component and a yeast derived protein component, and mixtures thereof, more preferably selected from the group consisting of a cashew nut derived protein component and a lupine derived protein component.

A pseudocereal, sometimes also referred to as pseudograin, is one of any non-grasses that are commonly used in the same way as cereals, whereas true cereals are grasses. Pseudocereals can be further distinguished from other non-cereal staple crops, such as potatoes, by their ability to be processed like a cereal, i.e. the seed of pseudocereal can be ground into flour and otherwise be used like a cereal. Suitable pseudocereals are for example buckwheat, quinoa and amaranth, preferably buckwheat and quinoa.

Water: Both the vegan precursor food product and the surface-ripened vegan food product contain water. As described above, the water content typically decreases during ripening. Hence the water content of the surface-ripened vegan product is typically 3 - 30% lower than the water content of the vegan precursor food product. Water may be tap water, suitable for use in human food applications. That is, water must be sufficiently clean, and should not contain excess salts, such as table salt, other minerals or trace elements, microorganisms or toxic components. Water may also be microfiltered prior to use in the preparation of the vegan precursor food product. Water is used in a quantity such that all components of the vegan precursor food product and vegan food product add up to 100% (w/w).

**Additives:** Both the vegan precursor food product and the vegan food product may further comprise various additives, such as flavors, odors and colorants. Suitable additives include various salts, such as sodium or potassium chloride, as well as organic flavors and odors such as citric acid and various esters and aldehydes. Suitable colorants include annatto (a mix of bixine and norbixine as obtained from *Bixa orrelana*) or b-carotene. However, additives are optional and if present must be acceptable to vegans, i.e. being derived from plants, algae, bacteria or fungi.

**Plant, algae, bacteria or fungus derived:** As used herein, the term "plant, algae, bacteria or fungus derived" means that a component present in the vegan food product or in the vegan precursor food product has been obtained from a plants, algae, bacteria or fungi, e.g. by isolation or extraction. However, the term is not limited to an individual pure or substantially pure substance but also includes mixtures of substances obtained from plants, algae, bacteria or fungi or the whole or part of the respective plants, algae, bacteria or fungi. A broad range of plants, algae, bacteria and fungi are known in the field of vegan foods and are also suitable for the present invention.

Suitable plants or parts of such plants are for example cashew, almond, soybean, lupine, pea, corn, potato and wheat.

Suitable algae are for example green algae such as *Chlorella,* e.g. *Chlorella vulgaris.* Suitable bacteria are for example cyanobacteria such as *Arthrospira platensis, Arthrospira fusiformis* and *Arthrospira maxima.*

Suitable fungi are for example *Fusarium venenatum.*

The term "plant, algae, bacteria or fungus derived" does not include substances that are obtained from animal sources. Nevertheless, substances that can also be found in animal products are included as long as they have been obtained from plants, algae, bacteria or fungi.

For example, "obtained from bacteria" also includes substances that are generally present in animal products but have been expressed in bacteria using recombinant gene expression methods.

**Vegan food product:** As used herein, vegan food products are foods which are not products of animal origin and which do not contain ingredients of animal origin. Instead, the ingredients are of plant, algae, bacterial or fungus origin, i.e. are derived from plants, algae, bacteria or fungi.

Typical examples of vegan food products are cheese analogues and meat analogues. For the production of both cheese analogues and meat analogues, similar ingredients can be used. Differences in organoleptic properties and texture between the two can be achieved through the addition of flavourings or differences in the production process. However, both cheese analogues and meat analogues are suitable vegan precursor food products that can be surface ripened according to the present invention to thereby obtain a surface-ripened vegan food product, such as a smear-ripened cheese analogue. In the context of the present invention, suitable surface-ripened vegan food products, particularly surface-ripened vegan food products obtained by the inventive method described herein, are solid or semi-solid at 20°C, i.e. they can be cut with a knife (cuttable) and / or are spreadable. Accordingly, such surface-ripened vegan food products retain their given shape at ambient conditions, *i.e.* not being fluid. This is in contrast to any liquid food products such as beverages.

**Vegan precursor food product:** As used herein, the term "vegan precursor food product" relates to an intermediate vegan food product that has not yet been subjected to surface-ripening. Such precursor food product may already be consumed prior to surface ripening. Vegan precursor food products may also be commercially available foods such as commercially available cheese analogues or meat analogues. However, in the context of the present invention, such foods are considered precursor food products unless a surface-ripening has been performed. It is considered advantageous that common commercially available non-surface ripened vegan foods can be used as vegan precursor food products in the context of the present invention. Thus surface-ripened vegan food products according to the invention may be obtained by surface ripening commercially available vegan foods that have not been subjected to surface ripening. In the context of the present invention, suitable vegan precursor food products are solid or semi-solid, i.e. they can be cut with a knife and / or are spreadable. This is in contrast to any liquid food products such as beverages.

A suitable vegan precursor food product may also be made by a method comprising the steps:

- creating a mixture containing water and at least one of the following components:

  a plant, algae, bacteria or fungus derived polysaccharide component, preferably in an amount of 5 - 75% (w/w);
  a plant, algae, bacteria or fungus derived protein component, preferably in an amount of 5 - 75% (w/w);
  and optionally in addition a plant, algae, bacteria or fungus derived fat component, preferably in an amount of 5 - 50% (w/w);

- heating the mixture to a temperature of 70-90 °C; and
- cooling the mixture until being solid or semi-solid.

According to the method of the invention, the microorganisms are cultured on a removable envelope, which is permeable for metabolites produced by microorganisms and for the microorganisms themselves and for components of the vegan precursor food product and for gaseous elements, in particular surrounding air.

The envelope is in direct physical contact with the vegan precursor food product, preferably over its entire surface.

In an advantageous embodiment, the envelope contains pores and/or micropores, preferably pores having a mean pore size in the range of 0.01 mm - 2.00 mm, preferably in the range of 0.1 mm - 1.0 mm, such as 0.3 mm - 0.7 mm.

The mean pore size may be measured by clamping the envelope in a tentering frame and applying to the envelope maximum extension in the elastic range of the envelope (no overstretching of the envelope). The mean pore size can be measured using a microscope, preferably a digital microscope, e.g. an Olympus DSX110 microscope. Typically, the mean pore size is determined from the pores that are visible on a 5.8x5.8 mm sized microscopy image with 48 fold magnification or from a suitable multitude of pores, such as 10 pores that are visible on said microscopy image.

In general, pores can have different shapes. A broad range of pore shapes of the envelope is suitable for the inventive method, e.g. a circular shape or an oval shape, such as an ellipse, or a polygonal shape, such as a quadrangle, pentagon, hexagon, heptagon, octagon, nonagon, or decagon. In case of a circular shape, the pore size relates to the diameter of the pore. In case of a polygonal shape, the pore size can be determined either by measuring the width or the height of the pore, i.e. the distance between the most distant corners (sometimes also referred to as vertices) of a polygonal pore in horizontal ("from left to right") or vertical ("from top to bottom") direction, respectively. Alternatively, pore size can be determined by measuring the distance between the most distant points (e.g. of an oval shape) or corners (e.g. of a polygonal shape) of the pore. In each case, the pore size is measured in the extended state of the envelope as described above. However, the exact method of measuring the mean pore size is not critical as long as the mean pore size is measured in the extended state of the envelope as described above.

Advantageously, the envelope is elastic. Suitable elasticity values are in the range of 10-500%, i.e. the envelope can be elastically extended by 10 - 500% of its size in a non-extended state, measured according to DIN EN 14704-1. More preferably, the envelope is 40-350% elastic, most preferably 50-300% elastic, again measured according to DIN EN 14704-1.

The envelope may have different elastic properties when measured in different directions. For example the envelope may be 10 - 60% elastic, advantageously 40 - 60% elastic, in one direction and 50 - 300%, advantageously 100 - 200% elastic in the other direction.

Advantageously, the envelope has a density (g/m^2) of 50 - 300 g/m^2, more advantageously 100 - 200 g/m^2, most advantageously 120 - 150 g/m^2.

Advantageously, the envelope is a fabric sleeve. Suitable fabrics complying with the elasticity and porosity as defined above are known in the field and a broad range of such fabrics is commercially available. In an advantageous embodiment, the envelope contains, particularly consists of, knitted fabrics or woven fabrics or non-woven fabrics, in particular knitted fabrics or woven fabrics, most preferably knitted fabrics.

Preferably, the envelope contains materials selected from the group consisting of natural or synthetic polymeric materials and mixtures thereof.

Natural polymeric materials may be selected from the group consisting of cellulose, cotton, wool, silk, cashmere and mixtures thereof.

Synthetic materials may be selected from the group consisting of cellulose-derivatives such as cellulose acetate and nitrocellulose, polyamides such as nylon, elastomers, polyurethanes, polyolefins such as polypropylenes, polyesters such as polyethylene terephthalate (PET), polyethylene glycols (PEG), acrylics and mixtures thereof. Elastane (synonymously spandex or lycra) is a mixture of polyurethane and polyethylene glycol. In addition, suitable synthetic materials may also be made from and/or contain natural polymeric materials, in particular cellulose, and/or cellulose-derivatives such as cellulose acetate and nitrocellulose. Such synthetic materials are sometimes also referred to as semi-synthetic materials. A suitable example of such a synthetic (or semi-synthetic) material is rayon, particularly lyocell, modal and micromodal.

Cellulose derivatives include materials containing a characteristic backbone of cellulose wherein one or more of the hydroxyl groups are substituted, e.g. by nitro- or acetate groups.

In an advantageous embodiment, the envelope contains cellulose and/or cellulose derivatives such as cellulose acetate and nitrocellulose. Preferably, the envelope contains cellulose or cellulose derivatives that have been obtained from hard wood, in particular obtained from beech tree.

Modal is a form of rayon and consists of cellulose and/or cellulose derivatives as defined above. Micromodal is a finer variant of modal. Micromodal fibres have a diameter of less than 10 $\mu$m (microfibre). The term "micromodal" as used herein is thus synonymous to "modal fibres having a diameter of 0.1 - 10 $\mu$m".

In an advantageous embodiment, the envelope contains modal or micromodal.

Lyocell is a form of rayon and consists of cellulose and/or cellulose derivatives as defined above. In another advantageous embodiment, the envelope contains lyocell.

As is known in the field, lyocell, modal and micromodal can be made from the same raw materials but differ in their manufacturing process. These differences in the manufacturing process result in different characteristic properties of the so-obtained material. The respective manufacturing processes are known in the field.

In an advantageous embodiment, the envelope contains a stretch fibre such as elastane (synonymously spandex, lycra) or roica, preferably roica. In particular, it is considered beneficial that roica is biodegradable.

In an advantageous embodiment, the envelope consists of a mixed fabric containing, preferably consisting of, cellulose or cellulose derivatives, e.g. modal or micromodal, and a stretch fibre, e.g. elastane or roica, preferably roica.

In a particularly advantageous embodiment, the envelope consists of a mixed fabric containing, preferably consisting of, (i) modal or micromodal and (ii) a stretch fibre such as elastane or roica, preferably roica.

In an advantageous embodiment, the envelope consists of a mixed fabric containing, preferably consisting of, one of the following combinations of materials:

(i) micromodal and elastane, or
(ii) modal and elastane, or
(iii) micromodal and roica, or
(iv) modal and roica.

In an advantageous embodiment, the envelope consists of a mixed fabric containing, preferably consisting of, (i) 80-95% cellulose or a cellulose-derivative, preferably selected from modal and micromodal, and (ii) 5-20% of a stretch fibre such as elastane or roica, preferably roica. A particularly suitable envelope consists of (i) 92% modal or micromodal and (ii) 8% of a stretch fibre such as elastane or roica. In an advantageous embodiment, the envelope consists of one of the following combinations of materials:

(i) 92% micromodal and 8% elastane, or
(ii) 92% modal and 8% elastane, or
(iii) 92% micromodal and 8% roica, or
(iv) 92% modal and 8% roica.

An example of such an envelope is an envelope consisting of the fabric "26319/1, 28 E Single Jersey Micromodal-Elastane".

In an advantageous embodiment, the envelope contains 0-100% polyamide, 0-60% elastane, 0-70% polyurethane, 0-40% polypropylene and 0-70% cotton.

Preferably, the envelope contains, more preferably consists of, materials that are biodegradable. Examples of biodegradable materials are modal, micromodal and lyocell.

Preferably, the envelope has a thickness of between 0.001 mm - 1.0 mm, preferably 0.01 mm - 0.1 mm. The envelope may thus also be a sheet-like material or a thin film.

The size, i.e. the surface area, of the envelope is adapted to the surface area of the vegan precursor food product to which it is applied. The envelope must cover the whole surface of the vegan precursor food product. Thus, in an elastically extended state, the surface area of the envelope is at least identical to the surface area of the vegan precursor food product, preferably the surface area of the envelope is in an elastically extended state larger than the surface area of the vegan precursor food product. However, in the unextended state, the surface area of the envelope is typically smaller than or identical to the surface area of the vegan precursor food product. Once wrapped, the elastic extension of the envelope leads to a surface area of the envelope that is identical or greater than the surface area of the vegan precursor food product.

Typically, in the unextended state, the envelope has a surface area of between 10 cm^2 to 20000 cm^2, preferably of between 50 cm^2 to 5000 cm^2.

Preferably, the envelope contains knitted or woven-fabrics, preferably knitted fabrics, consisting of yarns having a linear mass density (i.e. the thickness of a yarn in only one dimension; also referred to as linear density) of 5-165 DTEX, preferably 10-120 DTEX, more preferably 15-100 DTEX.

The linear mass density of a yarn can be measured according to DIN EN ISO 2060. An alternative unit for expressing the linear mass density of a yarn is "metric count (Nm)". The unit "Nm" is defined as the number of meters per gram of fiber or yarn. For example, 50.8 Nm correspond to 50.8 m per gram of yarn.

Thus in an advantageous embodiment, the envelope contains knitted or woven-fabrics, preferably knitted fabrics, consisting of yarns having a linear mass density of 2.000-61 Nm, preferably 667-83 Nm, more preferably 667-400 Nm.

In another advantageous embodiment, the envelope prevents or at least reduces spread of mould mycelium on the surface of the vegan food product or vegan precursor food product. Preferably, the envelope serves as a physical barrier against the spread of mould mycelium. The inventive method therefore alleviates the need for frequent mechanical brushing of a vegan precursor food product.

In another advantageous embodiment, before step a) the envelope is elastically extended and applied in step a) in such an at least partially elastically extended state.

In another advantageous embodiment, in step (b) ripening is achieved by

(b1) immersing the enveloped vegan precursor food product in a smear liquid, optionally containing surface starter organisms; and afterwards

(b2) keeping the vegan precursor food product humid by spraying onto said vegan precursor food product water, optionally water containing 2-10% (w/w) sodium chloride.

Preferably, in step (b2), water, optionally containing 2-10% (w/w) sodium chloride, is sprayed onto the enveloped vegan precursor food product 3-5 times per week until growth of the microorganisms within the smear layer has started. Then, the frequency of spraying can be reduced stepwise to 1-2 times per week until the ripening process is complete.

Hence, a further advantage of the method is that brushing of the surface of the vegan precursor food product with a smear liquid is not required. Nevertheless, brushing is possible within the scope of the method.

In a **second aspect,** the invention further relates to a surface-ripened vegan food product having a composition as described above that is obtainable or obtained by the manufacturing method described above (first aspect).

Preferably, the surface-ripened vegan food product is a surface-ripened cheese analogue or a surface-ripened meat analogue, more preferably a surface-ripened cheese analogue.

Preferably, the surface-ripened vegan food product is a smear-ripened vegan food product, such as a smear-ripened cheese analogue or smear-ripened meat analogue, more preferably a smear-ripened cheese analogue.

Due to the removal of the envelope with thereon adherent part of a surface, e.g. a smearsurface, the inventive method in particular leads to a surface-ripened vegan food product, particularly a surface-ripened cheese analogue, e.g. a smear-ripened cheese analogue, that is less susceptible to developing an off-odour after storage in a packaging material, in particular an air-tight packaging material, than an otherwise identical surface-ripened food product that was not ripened in an envelope and which was removed prior to packaging.

A surface-ripened cheese analogue, particularly a smear-ripened cheese analogue, according to the invention or a piece of said surface-ripened cheese analogue, typically maintains, or at least partially maintains, the optical characteristics of a traditional surface-ripened cheese, particularly a traditional smear-ripened cheese.

In an advantageous embodiment, a surface-ripened vegan food product, particularly a smear-ripened cheese analogue, or a piece of said surface-ripened vegan food product, according to the invention has a red-orange or brownish surface.

It is clear to the person skilled in the art that the various types of vegan food products differ in their exact composition and physical properties. As is known for traditional surface-ripened cheese, surface-ripened vegan food products of the same type that were produced at different sites can also differ in their composition and physical properties. Nevertheless, the characteristic properties of a given surface-ripened vegan food product, particularly a cheese analogue, can be determined by one or more of the methods described below.

Hence, in order to determine if a surface-ripened vegan food product was produced according to the method of the invention, a surface-ripened vegan food product having the same composition as the product in question (or a statistically significant number thereof) can be produced by the method of the invention and be used as reference material. Comparison of a surface-ripened vegan food product with this reference material thus offers a possibility to determine if a surface-ripened vegan food was produced by the method of the invention.

For example, the water content of the so-produced reference surface-ripened vegan food product can be measured after 1, 2, 3 and/or 4 months of ripening and compared to the vegan food product in question. The water content can be measured according to Agroscope method 13.8 ME.068 (accredited according to ISO/IEC 17025:2017) as of date 25.02.2019, available from Agroscope upon request.

Alternatively, the total count of microorganisms calculated based on the surface area of the so-produced reference surface-ripened vegan food product, particularly smear-ripened cheese analogue, can be measured and compared to the vegan food product in question.

In particular, said total count of microorganisms relates to microorganisms selected from the group consisting of anaerobic bacteria, aerobic bacteria, yeasts, moulds and mixtures thereof.

Various methods for the determination of such microorganisms are known in the art. Such methods are routinely performed by certified laboratories such as the Laboratoire agroalimentaire fribourgeois (LAAF). Exemplary methods are described in "Amato, Lea; ETH Diss. No. 21744; Impact of different packaging films on smear microflora composition, metabolic activity and quality of red-smear cheeses during cold storage".

The surface-ripened vegan food product according to the invention, particularly a smear-ripened cheese analogue, or a piece thereof, has a residual smear layer with a mean thickness of between 0.05 mm to 0.2 mm, preferably 0.05 mm to 0.1 mm.

The mean thickness of the residual smear layer can be measured by microscopy, e.g. using an Olympus DSX110 microscope.

An advantage of a surface-ripened vegan food product produced according to the method of the invention, particularly a smear-ripened cheese analogue, or a piece thereof, is that it typically leads to less off-flavouring during storage in an air-tight (or essentially air-tight) packaging than typical surface-ripened food products, e.g. a traditional smear-ripened cheese, that that was not produced according to the method of the invention. An air-tight (or essentially air-tight) packaging is a packaging leading to an anaerobic environment.

The group of substances which contribute to the off-flavouring ("off-flavour compounds") comprises ammonia and low molecular weight sulphur compounds such as methanethiol, hydrogen sulphide, dimethyl sulphide (DMS), dimethyl disulphide (DMDS), dimethyl trisulphide (DMTS) and carbonyl sulphide. Moreover, sulphur compounds may interact with each other and with other compounds in the food product, generating other volatile off-flavour compounds.

Volatile off-flavour compounds can be determined according to the following methods:

The amount of ammonia can be measured according to Agroscope method 13.6.ME.089 (accredited according to ISO/IEC 17025:2017) as of date 20.12.2019, available from Agroscope upon request.

The amount of ammonia and also other volatile off-flavour compounds can be measured according to Agroscope method 18.6.3.AA.003 ("Flüchtige Komponenten in Lebensmitteln mit Purge & Trap/GC") as of date 03.01.2014 and/or Agroscope method 18.6.3.AA.002 ("HS-SPME/GC - Flüchtige Komponenten in Lebensmitteln") as of date 03.01.2014. Both methods are available from Agroscope upon request.

The vegan food product contains water, preferably in an amount of 25 - 75% (w/w) and at least one of the following components:

- a plant, algae, bacteria or fungus derived polysaccharide component, preferably in an amount of 5 - 75% (w/w);
- a plant, algae, bacteria or fungus derived protein component, preferably in an amount of 5 - 75% (w/w).

Optionally, the smear-ripened vegan food product additionally contains a plant, algae, bacteria or fungus derived fat component, preferably in an amount of 5 - 50% (w/w).

As described above, the combination of polysaccharide component, protein component and fat component adds up to at least 25% (w/w) of the vegan food product or its precursor. Water is present in a quantity such that all components of the vegan precursor food product and vegan food product add up to 100% (w/w).

For example, a smear-ripened vegan food product according to the invention may contain 25% of the polysaccharide component and 75% water. In another example, a smear-ripened vegan food product according to the invention may contain 25% of the protein component and 75% water.

As described above, the vegan food product is solid or semi-solid, i.e. it can be cut with a knife (cuttable) and / or is spreadable.

Preferably, the smear-ripened vegan food product, e.g. a smear-ripened cheese analogue or a smear-ripened meat analogue, is a smear-ripened cheese analogue.

Advantageously, the inventive smear-ripened vegan food product complies with the characteristics defined above generally in the context of a surface-ripened vegan food product obtained by the inventive manufacturing method described herein (second aspect and first aspect of the invention, respectively).

For example, a smear-ripened vegan food product according to the invention, particularly a smear-ripened cheese analogue, or a piece thereof, typically has a residual smear layer with a mean thickness of between 0.05 mm to 0.2 mm, preferably 0.05 mm to 0.1 mm.

The mean thickness of the smear layer, can be measured by microscopy, e.g. using an Olympus DSX110 microscope.

A **third aspect** of the invention relates to the use of a sheet-like porous material (e.g. an envelope) in a method for producing a surface-ripened vegan food product. The sheet-like material is as defined above in the context of an envelope (first aspect of the invention).

Brief Description of the Drawings

The invention will be better understood and objects other than those set forth above will become apparent when consideration is given to the following detailed description thereof. This description makes reference to the annexed drawings, wherein:

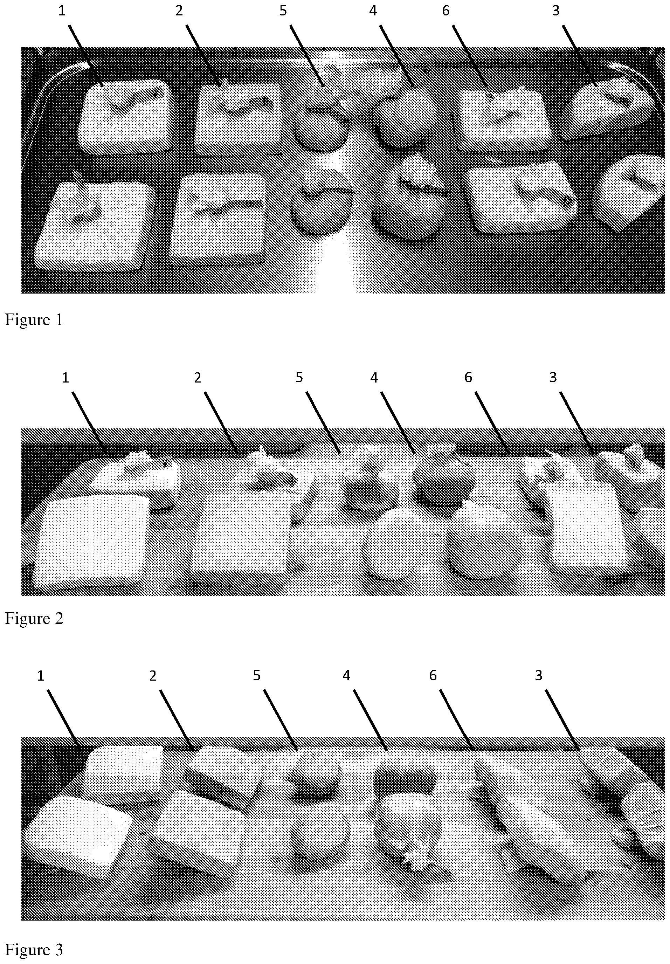

Figure 1: Picture of 5 vegan precursor food products and a reference dairy product prior to surface-ripening, each fully covered with an envelope having the characteristics described in the examples (general procedure). 1 = Example 1; 2 = Example 2; 3 = Example 3; 4 = Example 4; 5 = Example 5; 6 = Example 6 (reference).

Figure 2: Picture of 5 vegan precursor food products and a reference dairy product after 5 days of surface-ripening, as described in the examples (general procedure). A red-orange coloured surface is visible, indicating that the surface microflora started to grow and that surface-ripening has started.
1 = Example 1; 2 = Example 2; 3 = Example 3; 4 = Example 4; 5 = Example 5; 6 = Example 6 (reference).

Figure 3: Picture of 5 vegan precursor food products and a reference dairy product after 12 days of surface-ripening, as described in the examples (general procedure).

The red-orange colour of the surface is more intense than after 5 days of surface-ripening. This indicates that surface-ripening has progressed between day 5 and day 12. 1 = Example 1; 2 = Example 2; 3 = Example 3; 4 = Example 4; 5 = Example 5; 6 = Example 6 (reference).

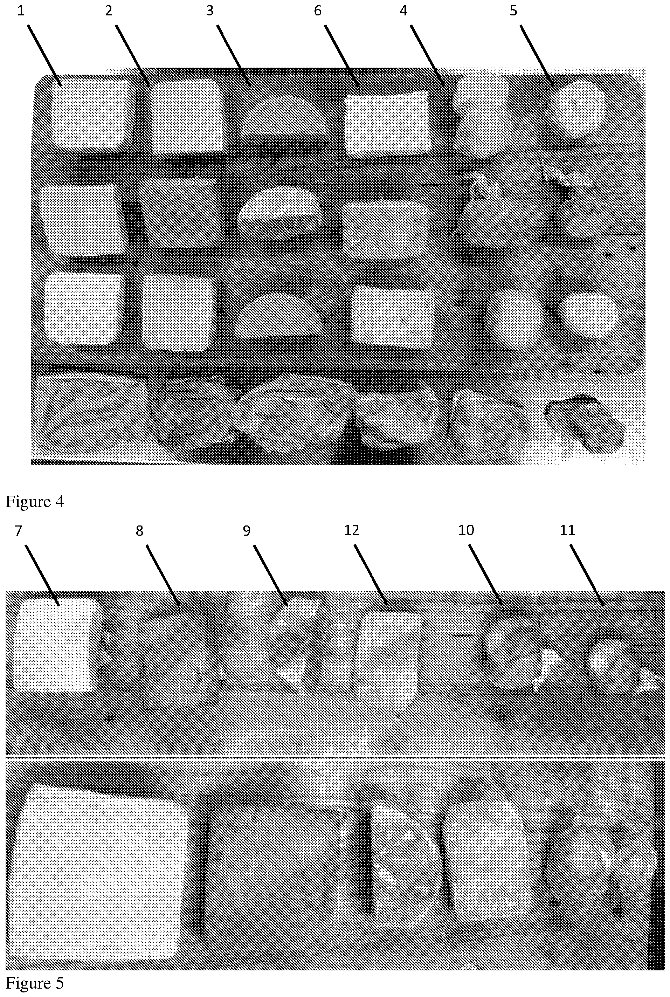

Figure 4: Picture of 5 vegan precursor food products and a reference dairy product after 12 days of surface-ripening, as described in the examples (general procedure). In each row, from the top to the bottom are shown: Control (no surface ripening), surface-ripened vegan food products and reference prior to removing the envelope, surface-ripened vegan food products and reference after removing the envelope, removed envelopes with thereon adherent part of the surface.

Approximately 90% (w/w) of the surface was removed by removing the envelope. Vegan food products have a red-orange-or brownish-coloured surface even after removing the envelope (comparison between third row and first row), resembling the colour of a traditional smear-ripened cheese.
1 = Example 1; 2 = Example 2; 3 = Example 3; 4 = Example 4; 5 = Example 5; 6 = Example 6 (reference).

Figure 5:

Top: Picture of 5 vegan precursor food products (examples 7 to 11) and a reference dairy product (example 12) after 3 weeks of surface-ripening, each fully covered with an envelope having the characteristics described in the examples.
Bottom: : Picture of the same 5 vegan precursor food products and the reference dairy product shown in the top row after 4 weeks of surface-ripening, each fully covered with the envelope. A red-brownish coloured surface of the surface-ripened vegan food products is visible both after 3 weeks of ripening (top) and after 4 weeks of ripening (bottom).
7 = Example 7; 8 = Example 8; 9 = Example 9; 10 = Example 10; 11 = Example 11; 12 = Example 12 (reference).

Figure 6:

Top: Picture of 5 vegan precursor food products (examples 7 to 11) and a reference dairy product (example 12) after storage for 5 weeks at 4°C without envelope (controls as described in examples 7 to 12).
Bottom: Picture of the same 5 vegan precursor food products and the reference dairy product shown in the top row after 5 weeks of surface-ripening as described in the examples, each fully covered with the envelope. A red-brownish coloured surface of the surface-ripened vegan food products (bottom) compared to the corresponding control samples (top) is visible. In each case the colour is more intense after 5 weeks of ripening compared to the colour after 12 d, 3 weeks or 4 weeks of ripening (cf. Fig. 4 and Fig. 5, respectively), indicating that surface-ripening has progressed.
7 = Example 7; 8 = Example 8; 9 = Example 9; 10 = Example 10; 11 = Example 11; 12 = Example 12 (reference).

Figure 7:

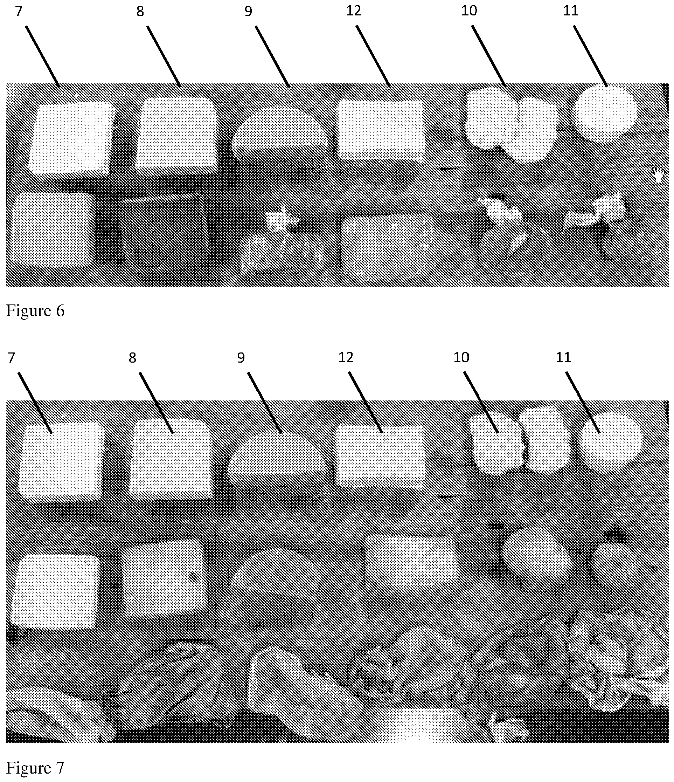

Top: Picture of 5 vegan precursor food products (examples 7 to 11) and a reference dairy product (example 12) after storage for 5 weeks at 4°C without envelope as shown in Fig. 6 (controls as described in examples 7 to 12).
Middle: : Picture of the same 5 vegan precursor food products and the reference dairy product shown in the top row after 5 weeks of surface-ripening after removal of the envelope.
Bottom: Removed envelopes with thereon adherent part of the surface.
Approximately 90% (w/w) of the surface was removed by removing the envelope. Vegan food products have a red-orange or red-brownish-coloured surface even after removing the envelope (comparison between surface-ripened vegan food products (middle) compared to the corresponding control samples (top)), thereby resembling the colour of a traditional smear-ripened cheese.
In each case the colour is more intense after 5 weeks of ripening compared to 12 d of ripening (cf. Fig. 4), indicating that surface-ripening has progressed.
7 = Example 7; 8 = Example 8; 9 = Example 9; 10 = Example 10; 11 = Example 11; 12 = Example 12 (reference).

Figure 8:

The same surface-ripened vegan food products (examples 7 to 11), the same reference product (example 12) and the same corresponding controls after 5 weeks of ripening are shown as in example 7. The surface-ripened vegan food products (middle; envelope was removed) were cut in two portions. It is visible that the vegan food products have **also ripened** on the inside (ripening progressed from the surface to the inside as is desired for surface-ripening).

7 = Example 7; 8 = Example 8; 9 = Example 9; 10 = Example 10; 11 = Example 11; 12 = Example 12 (reference).

EXAMPLES

To further illustrate the invention, the following examples are provided. These examples are provided with no intend to limit the scope of the invention.

The following examples were performed with commercially available vegan foods that were used as vegan precursor food products for the inventive method.

At least 5 different vegan precursor food products were commercially obtained and surface-ripened according to the inventive method. In addition, one dairy product was used as a reference and subjected to surface-ripening using the same method. At least two of each vegan precursor food products and the reference were subjected to surface-ripening (duplicates).

In addition, different envelopes (table 1) were characterized and are considered suitable for producing a surface-ripened vegan food product according to the invention.

Although the tested vegan precursor food products are considered cheese analogues and surface-ripening was performed using a smear-liquid ("smear-ripening"), the inventive method is likewise applicable to other vegan foods, such as meat analogues, and may be likewise performed using other ripening methods (e.g. different temperature of different relative humidity) and/or microorganisms such as *Penicillium camemberti* and *Penicillium nalgiovense,* provided their safety for use in food products has been evaluated, e.g. by full genome sequencing followed by sequence analysis.

General procedure:

Envelope D with the below listed characteristics was applied on commercially available vegan precursor food products such that the envelope was in direct physical contact with the vegan precursor food product over its entire surface (cf. Fig. 1). The envelope was permeable for metabolites produced by microorganisms and for microorganisms themselves and for gaseous elements, in particular surrounding air. The envelope had a density of 135 g/m^2 +/- 5%. The envelope was 53% +/- 5% elastic in one direction and 143% +/- 10% elastic in the other direction, as measured according to DIN EN 14704-1, and contained pores with a mean pore size of 0.05 - 0.5 mm (extended state). The envelope contained knitted fabrics consisting of yarns having a linear mass density of 100 DTEX. The envelope was biodegradable according to the "cradle to cradle" (C2C) standard.

The envelope was in an elastically extended state before applying on the vegan precursor food product.

Exemplary types of envelopes and their characteristics are listed in table 1 below.

Table 1. Exemplary envelopes

| Specification | Envelope A | Envelope B | Envelope C | Envelope D |
|---|---|---|---|---|
| Mean pore size extended state | 0.3-0.6 mm | 0.2-0.7 mm | 0.2-1.0 mm | 0.05-0.5 mm |
| Linear mass density | 17 DTEX 588 Nm | 22 DTEX 455 Nm | 17 DTEX 588 Nm | 100 DTEX 100 Nm |
| Material Polyamide Elastane Micromodal | 90% 10% 0% | 100% 0% 0% | 79% 21% 0% | 0% 8% 92% |

Directly after applying the envelope, the vegan precursor food products were immersed in a smear liquid containing 5% (w/w) sodium chloride and 1% (w/w) of a standardized mixed culture (OMK 704), available from Agroscope. The mixed culture (CFU>10^5 as determined on SC-Agar at 30°C for 5 d under aerobic conditions) contained a combination of *Arthrobacter ssp., Corynebacterium ssp., Brevibacterium linens* and *Debaryomyces hansenii.*

Subsequently, two different storage (ripening) periods were tested for each of the enveloped vegan precursor food products.

In a first set of experiments, each of the enveloped vegan precursor food products were ripened for 12 days at 14 - 15°C at 90-96% RH (examples 1 to 5).

In a second set of experiments, each of the enveloped vegan precursor food products and the respective reference dairy product were ripened for 5 weeks (35 days), also at 14 - 15°C at 90-96% RH.

During ripening, the vegan precursor food products were sprayed 1-2 times per week with the smear liquid described above.

As control, for each vegan precursor food product, an identical control sample was stored in its commercial packaging material at 4°C for 12 days (example 6) or 5 weeks (35 days; example 12), respectively (no treatment with smear-liquid).

After 5 days of ripening, a red-orange or brownish-coloured surface, as is characteristic for traditional smear-ripened cheese, had already developed on all tested vegan precursor food products (cf. Fig. 2). The intensity of the colour varied between the different products but was visible in all cases.

In the first set of experiments (examples 1 to 5; example 6 as reference), the envelope was removed together with thereon adherent part of a smear layer after 12 days of ripening. Approximately 90% (w/w) of the total smear layer was thereby removed (cf. Fig. 3 and 4). Although longer ripening times are possible and are typically preferred to achieve better ripening results, ripening for 12 days was already sufficient to obtain surface-ripened vegan food products having a red-orange or brownish-coloured surface as is characteristic for traditional smear-ripened cheese. The obtained surface-ripened vegan products had aromatic and taste characteristics closer to a traditional smear-ripened cheese than the respective precursor food products. The surface-ripened vegan products showed a significant difference in the organoleptic properties, particularly the taste, and the texture (firmer texture after ripening) compared to the respective control products (i.e. vegan precursor food products that were stored at 4° C instead of being surface-ripened in an envelope).

In addition, the pH value increased in all exemplary vegan food products already after 12 days of ripening.

Results of biochemical analysis of illustrative surface-ripened vegan food products after 12 days of ripening are shown in table 2.

Example 1 (12 days of ripening):

Composition of vegan precursor food product: Water, coconut oil (29% w/w), starch, salt, glucono-delta-lactone (acidity regulator), flavourings, olive extract, vitamin B12 (cyanocobalamin).

Commercial name: Violife Greek White

This vegan precursor food product is an example of a product that has been acidified through the addition of glucono-delta-lactone as acidity regulator.

Example 2 (12 days of ripening):

Composition of vegan precursor food product: Water, coconut oil (24% w/w), modified starch, starch, salt, sunflower seed flour, mature cheddar flavour, lactic acid (acidity regulator), olive extract, colour (beta-carotene), vitamin B12 (cyanocobalamin) Commercial name: Violife Epic Mature

This vegan precursor food product is an example of a product that has been acidified through the addition of lactic acid as acidity regulator. After 12 days of ripening, the concentration of lactic acid decreased due to metabolism of the surface microorganisms.

Example 3 (12 days of ripening):

Composition of vegan precursor food product: Water, potato flakes, coconut oil, chickpea flour, nutritional yeast (11% w/w), salt, natural flavours
Commercial name: Gondino

Example 4 (12 days of ripening):

Composition of vegan precursor food product: Rejuvelac (germinated water, quinoa and fenugreek), coconut oil, cashews, hulled almonds (12.5% w/w), powdered psyllium husk (2% w/w), extra virgin olive oil, salt.
Commercial name: Fermaggio Mezzarella

This is an example of a fermented vegan precursor food product containing lactic acid produced during fermentation. After 12 days of ripening, the concentration of lactic acid decreased due to metabolism of the surface microorganisms.

In this example, the shape of the vegan food product was significantly impacted by the envelope already after 12 days of ripening.

Example 5 (12 days of ripening):

Composition of vegan precursor food product: Cashews (60% w/w), water, salt, vegan cheese cultures Commercial name: New Roots La Cotta

This is an example of a fermented vegan precursor food product containing lactic acid produced during fermentation. After 12d of ripening the concentration of lactic acid decreased due to metabolism of the surface microorganisms.

In this example, the shape of the vegan food product was significantly impacted by the envelope already after 12 days of ripening.

Example 6 (reference cheese; 12 days of ripening):

Reference cheese (paneer; dairy product; vegetarian)
Composition: Milk, salt, citric acid (E 330; acidity regulator).

This is a dairy product with a relatively solid texture and was used as a reference material. Shape and texture of the reference material were similar to examples 1 and 2.

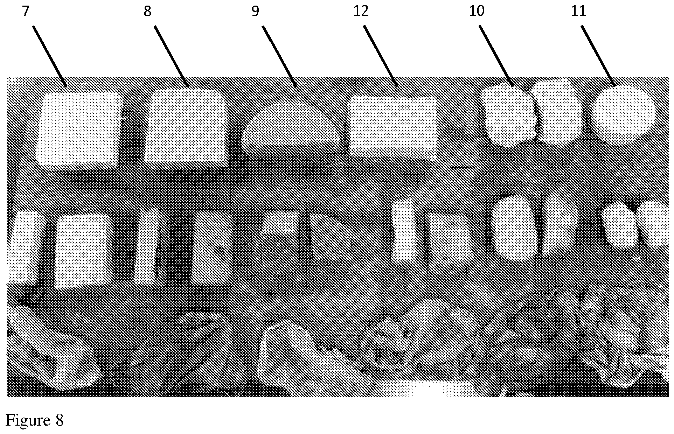

In the second set of experiments (examples 7 to 11; example 12 as reference) the envelope was removed together with thereon adherent part of a smear layer after 5 weeks of ripening. Approximately 90% (w/w) of the total smear layer was thereby removed (cf. Fig. 7 and 8).

Example 7 (5 weeks of ripening):

In this example, a vegan precursor food product identical to the one of example 1 and a respective control was used and ripened for 5 weeks as described above (commercial name: Violife Greek White).

Example 8 (5 weeks of ripening):

In this example, a vegan precursor food product identical to the one of example 2 and respective control was used and ripened for 5 weeks as described above (commercial name: Violife Epic Mature).

Example 9 (5 weeks of ripening):

In this example, a vegan precursor food product identical to the one of example 3 and respective control was used and ripened for 5 weeks as described above (commercial name: Gondino).

Example 10 (5 weeks of ripening):

In this example, a vegan precursor food product identical to the one of example 4 and respective control was used and ripened for 5 weeks as described above (commercial name: Fermaggio Mezzarella).

Example 11 (5 weeks of ripening):

In this example, a vegan precursor food product identical to the one of example 5 and respective control was used and ripened for 5 weeks as described above (commercial name: New Roots La Cotta).

Example 12 (reference cheese, 5 weeks of ripening):

In this example, a reference identical to the one of example 6 and a respective control were used and ripened for 5 weeks as described above (paneer; dairy product; vegetarian).

In particular in examples 4, 5, 10 and 11, the shape of the vegan food product was significantly impacted by the envelope. This significant influence on the shape of the ripened vegan food product may have been due to the relatively large decrease in water content compared to the respective controls (same vegan precursor food product stored at 4° C instead of being subjected to the inventive ripening method; cf. table 2 and table 3) in these examples.

Table 2. Results of chemical and biochemical analysis after 12 days of ripening

| Example | Water content [g/kg] | pH | Total lactic acid [mmol/kg] | Percentage L-lactic acid [% mmol/mmol] | OPA-value (free amino acids) [mmol/kg] |
|---|---|---|---|---|---|
| Example 1; control | 606 | 3.45 | 0 | 0 | 0.6 |
| Example 1; smear-ripened | 576 | 5.67 | 9.6 | 46.8 | 4.1 |
| Example 2; control | 513 | 4.17 | 22.1 | 100 | 20.6 |
| Example 2; smear-ripened | 512 | 4.76 | 9.5 | 100 | 10.4 |
| Example 3; control | 365 | 5.21 | 0 | 0 | 26.8 |
| Example 3; smear-ripened | 388 | 5.44 | 0 | 0 | 23.0 |
| Example 4; control | 562 | 4.65 | 46.2 | 37.1 | 21.0 |
| Example 4; smear-ripened | 531 | 6.5 | 14.2 | 39.5 | 19.9 |
| Example 5; control | 575 | 4.65 | 66.1 | 100 | 17.1 |
| Example 5; smear-ripened | 469 | 4.99 | 61.8 | 58 | 12.6 |
| Example 6 (reference; control) | 489 | 5.61 | 0 | 0 | 1.2 |
| Example 6 (reference; smear-ripened) | 504 | 5.95 | 13.7 | 100 | 29.0 |

Table 3. Results of chemical analysis after 5 weeks of ripening

| Example | Water content [g/kg] | pH | NaCl [g/kg] |
|---|---|---|---|
| Example 7; control | 594 | 3.32 | 15.7 |
| Example 7; smear-ripened | 485 | 6.76 | 25.4 |
| Example 8; control | 511 | 4.18 | 21.2 |
| Example 8; smear-ripened | 411 | 5.74 | 31.2 |
| **Example** 9; control | 351 | 5.19 | 23.1 |
| **Example** 9; smear-ripened | 343 | 5.89 | 26.7 |
| Example 10; control | 560 | 4.33 | 11.3 |
| Example 10; smear-ripened | 425 | 7.30 | 17.4 |
| Example 11; control | 564 | 4.63 | 8.0 |
| Example 11; smear-ripened | 326 | 5.74 | 16.0 |
| Example 12 (reference; control) | 506 | 5.57 | 6.7 |
| Example 12 (reference; smear-ripened) | 424 | 6.58 | 25.4 |

Table 4. Volatile carboxylic acids measured after 5 weeks of ripening

| Example | Total volatile carboxylic acid [mmol/k g] | Formic acid [mmol/kg] | Acetic acid [mmol/kg] | Propionic acid [mmol/kg] | n-butyric acid [mmol/kg] | n-caproic acid [mmol/kg] |
|---|---|---|---|---|---|---|
| Example 7; control | 3.24 | 0.05 | 1.16 | 0.20 | 1.54 | 0.28 |
| Example 7; smear-ripened | 27.57 | 5.34 | 20.81 | 0.17 | 0.34 | 0.28 |
| Example 8; control | 3.88 | 0.75 | 0.90 | 0.38 | 1.55 | 0.25 |
| Example 8; smear-ripened | 3.26 | 0.30 | 2.30 | 0.02 | 0.03 | 0.60 |
| Example 9; control | 68.95 | 1.69 | 44.31 | 0.21 | 21.88 | 0.44 |

(continued)

| Example | Total volatile carboxylic acid [mmol/k g] | Formic acid [mmol/kg] | Acetic acid [mmol/kg] | Propionic acid [mmol/kg] | n-butyric acid [mmol/kg] | n-caproic acid [mmol/kg] |
|---|---|---|---|---|---|---|
| Example 9; smear-ripened | 36.14 | 1.10 | 23.0 | 0.10 | 10.79 | 0.86 |
| Example 10; control | 14.04 | 0.39 | 13.32 | 0.12 | 0.01 | 0.20 |
| Example 10; smear-ripened | 14.87 | 0.71 | 12.24 | 1.65 | 0.04 | 0.19 |
| Example 11; control | 17.03 | 9.22 | 7.80 | 0.01 | <0.01 | <0.01 |
| Example 11; smear-ripened | 11.39 | 0.83 | 9.78 | 0.72 | 0.02 | <0.01 |
| Example 12 (reference; control) | 1.17 | 1.17 | 0.96 | 0.01 | 0.07 | 0.02 |
| Example 12 (reference; smear-ripened) | 13.08 | 13.08 | 8.04 | 0.61 | 1.35 | 0.52 |

Table 5. Results of biochemical analysis after 5 weeks of ripening

| Example | Total lactic acid [mmol/kg] | Percentage L-lactic acid [% mmol/mmol] | OPA-value (free amino acids) [mmol/kg] |
|---|---|---|---|
| Example 7; control | 2.7 | 100 | 0.4 |
| Example 7; smear-ripened | 8.8 | 62.4 | 9.2 |
| Example 8; control | 21.8 | 100 | 19.8 |
| Example 8; smear-ripened | 4.6 | 100 | 10.1 |
| Example 9; control | 0.0 | - | 27.2 |
| Example 9; smear-ripened | 0.0 | - | 21.7 |
| Example 10; control | 52.6 | 34.9 | 25.9 |
| Example 10; smear-ripened | 0.0 | - | 27.3 |
| Example 11; control | 64.8 | 100 | 17.7 |
| Example 11; smear-ripened | 0.0 | - | 23.6 |
| Example 12 (reference; control) | 0.0 | - | 0.9 |
| Example 12 (reference; smear-ripened) | 0.0 | | 51.8 |

Table 6. Results of biochemical analysis after 5 weeks of ripening (continued from table 5)

| Example | Total protein content [g/kg] | Non-protein nitrogen [g/kg] | Citric acid [mmol/kg] |
|---|---|---|---|
| Example 7; control | 0.55 | 0.08 | 0.0 |
| Example 7; smear-ripened | 6.46 | 0.93 | 0.0 |
| Example 8; control | 14.09 | 0.92 | 1.6 |
| Example 8; smear-ripened | 15.46 | 1.53 | 0.0 |
| Example 9; control | 47.27 | 1.45 | 6.5 |
| Example 9; smear-ripened | 50.21 | 2.11 | 4.6 |

(continued)

| Example | Total protein content [g/kg] | Non-protein nitrogen [g/kg] | Citric acid [mmol/kg] |
|---|---|---|---|
| Example 10; control | 38.03 | 1.72 | 0.0 |
| Example 10; smear-ripened | 47.74 | 2.35 | 0.0 |
| Example 11; control | 99.63 | 1.36 | 3.3 |
| Example 11; smear-ripened | 164.8 | 2.15 | 0.0 |
| Example 12 (reference; control) | 251.5 | 0.41 | 16.1 |
| Example 12 (reference; smear-ripened) | 287.5 | 8.19 | 9.6 |

Conclusion from examples 1 to 12:

The data clearly shows that the inventive method enables surface-ripening, in particular smear-ripening, of multiple vegan precursor food products to thereby obtain surface-ripened vegan food products. The data further shows that while good ripening results are already obtained after 12 days of ripening, longer ripening periods are also compatible with the inventive method. Such longer ripening periods result in surface-ripened vegan food products with different characteristics than those obtained using shorter ripening periods, thereby indicating that the ripening process can be continued over a broad range of ripening periods. The surface microflora led to a degradation of lactic acid and proteins (where present) and was thus able to influence the flavour and texture formation. However, the skilled person understands that the biochemical and biophysical characteristics of surface-ripened vegan food products according to the instant invention depend on the individual vegan precursor food products.

Without wishing to be bound by theory, it is believed that the texture of the tested vegan food products was influenced by the formation of a starch-gel structure.

A picture of the vegan precursor food products (examples 7 to 11) and the reference product (example 12) after 3 weeks of ripening and 4 weeks of ripening is shown in Figure 5.

In particular, the following results were obtained:

1. In each of examples 1 to 5 and 7 to 11 (5 weeks of ripening), the water content of the surface-ripened vegan food product was decreased compared to the respective stored controls. Further, in each of examples 7 to 11, the water content was decreased compared to the respective results obtained for examples 1 to 5 (12 days of ripening). The decrease in water content was indicative of the progression of the ripening process. Further, the decrease in water content depends on the individual vegan precursor food product and was particularly pronounced in examples 4, 5, 10 and 11.

2. In examples 2, 4, 5, 8, 10 and 11, the concentration of lactic acid significantly decreased, this being a further indicator for ripening of certain vegan food products.

3. In examples 8, 9 and 11, the concentration of citric acid decreased, this being a further indicator for ripening of certain vegan food products. Without wishing to be bound by theory, it is believed that the concentration of citric acid decreased due to fermentation.

4. In each of examples 7 to 11, the total protein content of the surface-ripened vegan food product increased compared to the respective stored controls, thereby indicating ripening. Without wishing to be bound by theory, it is believed that the increase in total protein content may be at least partly due to the decreased water content. Whereas most surface-ripened vegan food products had a total protein content of between 0% to 5% (w/w), the surface-ripened vegan food product of example 11 had a total protein content of about 17%, which may be due to the relatively high protein content of cashews. Interestingly, the increase in total protein content was particularly pronounced in example 7, which may be due to additional proteins produced from the surface microflora during ripening.

5. In each of examples 7 to 11, the concentration of "non-protein nitrogen" increased compared to the respective stored controls, thereby indicating ripening. Without wishing to be bound by theory, it is believed that the concentration of "non-protein nitrogen" decreases during ripening due to metabolisation of proteins, this being further supported by an increase in OPA value in certain vegan food products (cf. examples 7, 11 and 12).

6. In each of examples 1 to 5 and 7 to 11, the pH value of the surface-ripened vegan food product significantly increased compared to the respective stored controls. Further, in each of examples 7 to 11 the pH value of the surface-ripened vegan food product significantly compared to the respective results obtained for examples 1 to 5 (12 days of ripening). This increase in pH value was indicative of the progression of the ripening process. Without wishing to be bound by theory, it is believed that the increase in pH value was due to metabolisation of lactic acid and due to the production of alkaline metabolites that result from protein degradation, such as ammonia.

7. In examples 4, 5, 10 and 11, the inventive method had a particularly pronounced effect on the shape of the product.

The following analysis methods were used to obtain the results listed in tables 2, 3, 4 and table 5:

Water content (Loss on drying):
The water content was measured by thermogravimetric analysis (loss on drying) in a drying oven at 102°C for 4 h. Specific details are provided in Agroscope method 13.8.ME.068 (accredited according to ISO/IEC 17025:2017), as of date 25.02.2019, available from Agroscope upon request.
pH value:
The pH value was measured at the center of the vegan food product using a commercial pH electrode. Specific details are provided in Agroscope method 13.8.ME.056 (accredited according to ISO/IEC 17025:2017) as of date 12.02.2019, available from Agroscope upon request.
L-Lactic acid, D-Lactic acid, total lactic acid:
D(-)-lactic acid and L(+)-lactic acid were measured using enzymes D(-)-lactate dehydrogenase and L(+)-lactate dehydrogenase, respectively. Further details are provided in Agroscope method 13.6 ME.026 (accredited according to ISO/IEC 17025:2017) as of date 04.03.2014, available from Agroscope upon request. The amount of total lactic acid was calculated as being the sum of L-lactic acid and D-lactic acid.
OPA value:

Free amino acids (OPA value) were measured by determining the total amount of free amino acids and di- and tripeptides remaining in solution after prior precipitation of proteins using perchloric acid.
Primary amino groups of amino acids and amines, and primary amino groups of N-terminal amino acids of peptides and proteins formed a coloured 1-alkylthio-2-alkylisoindole compound with O-phthaldialdehyde (OPA) in the presence of 2-mercap-toethanesulfonic acid, followed by photometric measurement at 340 nm. Further details are provided in Agroscope method 13.6 ME.020 (accredited according to ISO/IEC 17025:2017) as of date 06.10.2020, available from Agroscope upon request.

Total protein content, Non-protein nitrogen:

Potentiometric determination of total nitrogen (TN) according to Kjeldahl, also commonly referred to as Total Kjeldahl nitrogen (TKN). Test samples were digested with sulphuric acid after addition of copper sulphate titanium dioxide catalyst. After addition of concentrated sodium hydroxide solution, the resulting ammonia was distilled with steam into a boric acid solution. The borate formed was titrated potentiometrically with hydrochloric acid. Further details are provided in Agroscope method 13.8.ME.061 (accredited according to ISO/IEC 17025:2017) as of date 22.02.2019, available from Agroscope upon request.
For the determination of the non-protein nitrogen (NPN), the test sample was suspended with water. Then, trichloroacetic acid was added to the suspended test sample to precipitate the proteins. After filtering, the nitrogen content was determined in the clear filtrate according to the Kjeldahl method. Further details are provided in Agroscope method 13.8.ME.054 (accredited according to ISO/IEC 17025:2017) as of date 22.02.2019, available from Agroscope upon request.
The total protein content (pure protein) can then be calculated based on TN (TKN) and NPN measurements described above according to the following formula:

$$\text{Total protein content in g/kg} = (TN-NPN)*CF*14.0067.$$

CF= conversion factor;
A conversion factor of 6.25 was applied for vegan food products (examples 1-5, 7-11) and is likewise applicable for vegetarian hybrid food products.
A conversion factor of 6.38 was applied for dairy products (examples 6, 12).

Total volatile carboxylic acid:

Total volatile carboxylic acid and individual volatile carboxylic acids (formic acid, acetic acid, propionic acid, n-butyric acid, n-caproic acid; cf. table 4) were measured by Gas chromatography with downstream flame ionisation detector (GC-FID) after weakly basic aqueous extraction followed by headspace esterification. The concentration of total volatile carboxylic acids was calculated from the sum of the individual volatile carboxylic acids listed in table 4. Further details are provided in Agroscope method 13.8.ME.103 (accredited according to ISO/IEC 17025:2017) as of date 07.12.2022, available from Agroscope upon request.

Reference material used for quantification of individual volatile carboxylic acids: Formic acid C1 98 - 100 % p.a. (e.g. Merck No.1.00264.1000)

Acetic acid C2 p.a. (e.g. Merck No. 1.00063.1000)

Propionic acid C3 puriss (e.g. Sigma-Aldrich No. 402907)

Butyric acid n-C4 puriss (e.g. Sigma-Aldrich No. B103500)

Caproic acid n-C6 purum (e.g. Sigma-Aldrich No. 21530, CAS No. 142-62-1)

In each of examples 1 to 12, the surface-ripened vegan food products had a residual smear layer with a mean thickness of about 0.1 mm.

While there are shown and described presently preferred embodiments of the invention, it is to be distinctly understood that the invention is not limited thereto but may be otherwise variously embodied and practiced within the scope of the following claims.

## Claims

1. A **method for producing** a surface-ripened vegan food product from a vegan precursor food product, **characterized in that**

    the method comprises the steps

    (a) providing a vegan precursor food product, applying an envelope thereon and subsequently applying microorganisms thereon,
    said envelope

    - being in direct physical contact with the surface of the vegan precursor food product, and
    - being permeable for metabolites produced by the microorganisms and for the microorganisms themselves and for components of the vegan precursor food product and for gaseous elements, in particular surrounding air; and

    (b) ripening the vegan precursor food product within the envelope; and
    (c) removing the envelope to thereby obtain the vegan food product; and

    wherein the vegan food product and the vegan precursor food product, each contain water and at least one of the following components:

    - a plant, algae, bacteria or fungus derived polysaccharide component;
    - a plant, algae, bacteria or fungus derived protein component;

    and optionally in addition a plant, algae, bacteria or fungus derived fat component.

2. The method according to claim 1,
    wherein the method further comprises (d) packaging the vegan food product for transport and/or sale.

3. The method according to claim 1 or 2,
    wherein the surface-ripened vegan food product is a surface-ripened cheese analogue, particularly a smear-ripened cheese analogue.

4. The method according to any one of claims 1 to 3,

    wherein the plant, algae, bacteria or fungus derived polysaccharide component is a root or tuber starch, grain starch, algae starch or a mixture thereof, preferably selected from the group consisting of tapioca starch, potato starch, corn starch, agar, alginate and mixtures thereof; and

wherein the protein component is selected from the group consisting of a cashew nut derived protein component, an almond derived protein component, a soybean derived protein component, a lupine derived protein component, a pea derived protein component, a corn derived protein component, a potato derived protein component, a wheat derived protein component, an algae derived protein component, a pseudocereal derived protein component, a yeast derived protein component, and mixtures thereof; and

wherein the plant, algae, bacteria or fungus derived fat component is selected from the group consisting of avocado oil, canola oil, cocoa butter, coconut oil, corn oil, palm oil, safflower oil, sesame oil, sunflower oil, rapeseed oil, algae oil a cashew nut derived fat component, an almond derived fat component, a soybean derived fat component, a lupine derived fat component, a pea-derived fat component, a yeast derived fat component, and mixtures thereof.

5. The method according to any one of claims 1 to 4,

wherein the envelope contains pores having a mean size in the range of 0.01 mm - 2.00 mm, wherein the mean size relates to

a) in case of a circular pore, the pore size relates to the diameter of the pore; or
b) in case of an oval or polygonal shape of the pore, the pore size relates to the distance between the most distant points or corners of the pore

as measured by light microscopy, preferably according to the following protocol:

(i) clamping the envelope in a tentering frame; and
(ii) applying to the envelope maximum extension in the elastic range of the envelope; and
(iii) measuring the size of a multitude of pores that are visible on a 5.8x5.8 mm sized microscopy image with 48 fold magnification.

6. The method according to any one of claims 1 to 5,
wherein the envelope contains knitted fabrics or woven fabrics or non-woven fabrics, in particular knitted fabrics or woven fabrics, most preferred knitted fabrics.

7. The method according to any one of claims 1 to 6, wherein the envelope contains knitted or woven-fabrics, preferably knitted fabrics, consisting of yarns having a linear mass density of 5-165 DTEX, preferably 10-120 DTEX, more preferably 15-100 DTEX.

8. The method according to any one of claims 1 to 7,

wherein the envelope contains materials selected from the group consisting of natural polymeric materials, synthetic polymeric materials, and mixtures thereof,
wherein natural polymeric materials are preferably selected from the group consisting of cellulose, cotton, wool, silk, cashmere and mixtures thereof, and
wherein synthetic polymeric materials are preferably selected from the group consisting of cellulose-derivatives, such as cellulose acetate and nitrocellulose, polyamides, elastomers, polyurethanes, polyolefins such as polypropylenes, polyesters, such as polyethylene terephthalate, polyethylene glycols, acrylics, and mixtures thereof.

9. The method according to any one of claims 1 to 8, wherein the envelope comprises cellulose and/or cellulose derivatives, preferably selected from modal, micromodal and lycocell.

10. **A vegan food product** obtainable by the method according to any one of claims 1 - 9,

wherein the vegan food product contains water, preferably in an amount of 25 - 75% (w/w) and at least one of the following components:

• a plant, algae, bacteria or fungus derived polysaccharide component, preferably in an amount of 5 - 75% (w/w);

• a plant, algae, bacteria or fungus derived protein component, preferably in an amount of 5 - 75% (w/w); and optionally in addition a plant, algae, bacteria or fungus derived fat component, preferably in an amount of 5 - 50% (w/w)

**characterized in that** the vegan food product has a residual smear layer with a mean thickness of between 0.05 mm to 0.2 mm, as measured by microscopy.

11. The vegan food product according to claim 10,
which complies with one or more of the following criteria:

• the plant, algae, bacteria or fungus derived polysaccharide component is a root starch, a tuber starch, a grain starch, an algae starch or a mixture thereof, preferably selected from the group consisting of tapioca starch, potato starch, corn starch, agar, alginate and mixtures thereof;
• the plant, algae, bacteria or fungus derived fat component is selected from the group consisting of avocado oil, canola oil, cocoa butter, coconut oil, corn oil, palm oil, safflower oil, sesame oil, sunflower oil, rapeseed oil, algae oil, a cashew nut derived fat component, an almond derived fat component, a soybean derived fat component, a lupine derived fat component, a pea-derived fat component, a yeast derived fat component and mixtures thereof;
• the plant, algae, bacteria or fungus derived protein component is selected from the group consisting of a cashew nut derived protein component, an almond derived protein component, a soybean derived protein component, a lupine derived protein component, a pea derived protein component, a corn derived protein component, a potato derived protein component, a wheat derived protein component, an algae derived protein component, a pseudocereal derived protein component, a yeast derived protein component and mixtures thereof.

12. The vegan food product according to any one of claims 10 - 11,

which is a smear-ripened cheese analogue, and/or
which is solid or semi solid at 20°C.

13. The vegan food product according to any one of claims 10 - 12, which has a residual smear layer with a mean thickness of between 0.05 mm to 0.1 mm, as measured by microscopy.

14. **Use of a sheet-like porous material** in the manufacturing of a surface-ripened vegan food product,

wherein the sheet-like material contains pores having a mean size in the range of 0.01 mm - 2.00 mm, wherein the mean size relates to

a) in case of a circular pore, the pore size relates to the diameter of the pore; or
b) in case of an oval or polygonal shape of the pore, the pore size relates to the distance between the most distant points or corners of the pore;

wherein the sheet-like material is applied on a vegan precursor food product and subsequently microorganisms are applied thereon;
and
wherein the vegan food product contains water and at least one of the following components:

• a plant, algae, bacteria or fungus derived polysaccharide component, preferably in an amount of 5 - 75% (w/w);
• a plant, algae, bacteria or fungus derived protein component, preferably in an amount of 5 - 75% (w/w);

and optionally in addition a plant, algae, bacteria or fungus derived fat component, preferably in an amount of 5 - 50% (w/w).

15. The use according to claim 14, wherein the vegan food product is as defined in any one of claims 10 - 13; and / or the sheet-like material is an envelope as defined in any one of claims 1, 5-9.

**Patentansprüche**

1. Verfahren zur Herstellung eines oberflächengereiften veganen Lebensmittelprodukts aus einem veganen Vorläuferlebensmittelprodukt, **dadurch gekennzeichnet, dass**

   das Verfahren die Schritte umfasst

   (a) Bereitstellen eines veganen Vorläuferlebensmittelprodukts, Aufbringen einer Hülle und anschliessendes Aufbringen von Mikroorganismen darauf,
   besagter Umschlag

   • steht in unmittelbarem physischen Kontakt mit der Oberfläche des veganen Vorläuferlebensmittelprodukts, und
   • ist durchlässig für die von den Mikroorganismen erzeugten Metaboliten und für die Mikroorganismen selbst sowie für Bestandteile des veganen Vorläuferlebensmittelprodukts und für gasförmige Elemente, insbesondere die Umgebungsluft; und

   (b) Reifung des veganen Vorläuferlebensmittelprodukts in der Hülle; und
   (c) Entfernen der Hülle, um das vegane Lebensmittel zu erhalten; und

   wobei das vegane Lebensmittel und das vegane Vorläuferlebensmittelprodukt jeweils Wasser und mindestens einen der folgenden Bestandteile enthalten:

   • eine aus Pflanzen, Algen, Bakterien oder Pilzen gewonnene Polysaccharidkomponente;
   • eine aus Pflanzen, Algen, Bakterien oder Pilzen gewonnenen Eiweisskomponente;

   und gegebenenfalls zusätzlich eine aus Pflanzen, Algen, Bakterien oder Pilzen gewonnene Fettkomponente.

2. Das Verfahren nach Anspruch 1,
   wobei das Verfahren ferner (d) das Verpacken des veganen Lebensmittelprodukts für den Transport und/oder Verkauf umfasst.

3. Das Verfahren nach Anspruch 1 oder 2,
   wobei es sich bei dem oberflächengereiften veganen Lebensmittel um ein oberflächengereiftes Käseanalogon, insbesondere ein schmieregereiftes Käseanalogon handelt.

4. Das Verfahren nach einem der Ansprüche 1 bis 3,

   wobei die von Pflanzen, Algen, Bakterien oder Pilzen stammende Polysaccharidkomponente Wurzel- oder Knollenstärke, Getreidestärke, Algenstärke oder eine Mischung davon ist, vorzugsweise ausgewählt aus der Gruppe bestehend aus Tapiokastärke, Kartoffelstärke, Maisstärke, Agar, Alginat und Mischungen davon; und wobei die Proteinkomponente ausgewählt ist aus der Gruppe bestehend aus einer von Cashewnüssen abgeleiteten Proteinkomponente, einer von Mandeln abgeleiteten Proteinkomponente, einer von Sojabohnen abgeleiteten Proteinkomponente, einer von **Lu**pinen abgeleiteten Proteinkomponente, einer von Erbsen abgeleiteten Proteinkomponente, einer von Mais abgeleiteten Proteinkomponente, einer von Kartoffeln abgeleiteten Proteinkomponente, einer von Weizen abgeleiteten Proteinkomponente, einer von Algen abgeleiteten Proteinkomponente, einer von Pseudogetreide abgeleiteten Proteinkomponente, einer von Hefe abgeleiteten Proteinkomponente und Mischungen davon besteht; und
   wobei die aus Pflanzen, Algen, Bakterien oder Pilzen gewonnene Fettkomponente ausgewählt ist aus der Gruppe bestehend aus Avocadoöl, Canolaöl, Kakaobutter, Kokosnussöl, Maisöl, Palmöl, Distelöl, Sesamöl, Sonnenblumenöl, Rapsöl, Algenöl, einer aus Cashewnüssen gewonnenen Fettkomponente, einer aus Mandeln gewonnenen Fettkomponente, einer aus Sojabohnen gewonnenen Fettkomponente, einer aus Lupinen gewonnenen Fettkomponente, einer aus Erbsen gewonnenen Fettkomponente, einer aus Hefe gewonnenen Fettkomponente und Mischungen davon.

5. Das Verfahren nach einem der Ansprüche 1 bis 4,

   wobei die Hülle Poren mit einer mittleren Grösse im Bereich von 0,01 mm - 2,00 mm enthält, wobei sich die mittlere Grösse bezieht auf

a) im Falle einer kreisförmigen Pore bezieht sich die Porengrösse auf den Durchmesser der Pore; oder
b) im Falle einer ovalen oder polygonalen Form der Pore bezieht sich die Porengrösse auf den Abstand zwischen den am weitesten entfernten Punkten oder Ecken der Pore

wie durch Lichtmikroskopie gemessen, vorzugsweise nach folgendem Protokoll:

(i) Einspannen des Umschlags in einen Spannrahmen und
(ii) Aufbringen einer maximalen Dehnung im elastischen Bereich der Hülle; und
(iii) Messung der Grösse einer Vielzahl von Poren, die auf einem 5,8x5,8 mm grossen Mikroskopbild mit 48-facher Vergrößerung sichtbar sind.

6. Das Verfahren nach einem der Ansprüche 1 bis 5,
   wobei die Hülle Gewirke oder Gewebe oder Vliesstoffe, insbesondere Gewirke oder Gewebe, am meisten bevorzugt Gewirke, enthält.

7. Das Verfahren nach einem der Ansprüche 1 bis 6, wobei die Hülle Gewirke oder Gestricke, vorzugsweise Gewirke, enthält, die aus Garnen mit einer linearen Massendichte von 5-165 DTEX, vorzugsweise 10-120 DTEX, besonders bevorzugt 15-100 DTEX bestehen.

8. Das Verfahren nach einem der Ansprüche 1 bis 7,

   wobei die Hülle Materialien enthält, die ausgewählt sind aus der Gruppe bestehend aus natürlichen polymeren Materialien, synthetischen polymeren Materialien und Mischungen davon,
   wobei natürliche polymere Materialien vorzugsweise ausgewählt sind aus der Gruppe bestehend aus Cellulose, Baumwolle, Wolle, Seide, Kaschmir und Mischungen davon, und
   wobei synthetische polymere Materialien vorzugsweise ausgewählt sind aus der Gruppe bestehend aus Cellulosederivaten, wie Celluloseacetat und Nitrocellulose, Polyamiden, Elastomeren, Polyurethanen, Polyolefinen, wie Polypropylen, Polyestern, wie Polyethylenterephthalat, Polyethylenglykolen, Acrylen und Mischungen davon.

9. Das Verfahren nach einem der Ansprüche 1 bis 8, wobei die Hülle Cellulose und/oder Cellulosederivate umfasst, vorzugsweise ausgewählt aus Modal, Mikromodal und Lyocell.

10. **Veganes Lebensmittelprodukt,** erhältlich nach dem Verfahren gemäss einem der Ansprüche 1 bis 9,

    wobei das vegane Lebensmittel Wasser, vorzugsweise in einer Menge von 25 - 75 % (w/w), und mindestens eine der folgenden Komponenten enthält:

    • eine aus Pflanzen, Algen, Bakterien oder Pilzen gewonnene Polysaccharidkomponente, vorzugsweise in einer Menge von 5 - 75 % (w/w);
    • eine aus Pflanzen, Algen, Bakterien oder Pilzen gewonnene Proteinkomponente, vorzugsweise in einer Menge von 5 - 75 % (w/w);
    und gegebenenfalls zusätzlich eine aus Pflanzen, Algen, Bakterien oder Pilzen gewonnene Fettkomponente, vorzugsweise in einer Menge von 5 - 50 % (w/w)

    **dadurch gekennzeichnet, dass** das vegane Lebensmittelprodukt eine Restschmiereschicht mit einer mittleren Dicke zwischen 0,05 mm und 0,2 mm aufweist, gemessen durch Mikroskopie.

11. Das vegane Lebensmittelprodukt nach Anspruch 10,
    die eines oder mehrere der folgenden Kriterien erfüllen:

    • die aus Pflanzen, Algen, Bakterien oder Pilzen stammende Polysaccharidkomponente ist eine Wurzelstärke, eine Knollenstärke, eine Getreidestärke, eine Algenstärke oder eine Mischung davon, vorzugsweise ausgewählt aus der Gruppe bestehend aus Tapiokastärke, Kartoffelstärke, Maisstärke, Agar, Alginat und Mischungen davon;
    • die aus Pflanzen, Algen, Bakterien oder Pilzen gewonnene Fettkomponente ausgewählt ist aus der Gruppe bestehend aus Avocadoöl, Canolaöl, Kakaobutter, Kokosnussöl, Maisöl, Palmöl, Distelöl, Sesamöl, Sonnenblumenöl, Rapsöl, Algenöl, einer aus Cashewnüssen gewonnenen Fettkomponente, einer aus Mandeln gewonnenen Fettkomponente, einer aus Sojabohnen gewonnenen Fettkomponente, einer aus **Lu**pinen gewonnenen Fettkomponente, einer aus Erbsen gewonnenen Fettkomponente, einer aus Hefe gewonnenen Fettkomponente und Mischungen davon;

• die von Pflanzen, Algen, Bakterien oder Pilzen stammende Proteinkomponente ausgewählt ist aus der Gruppe bestehend aus einer von Cashewnüssen stammenden Proteinkomponente, einer von Mandeln stammenden Proteinkomponente, einer von Sojabohnen stammenden Proteinkomponente, einer von Lupinen stammenden Proteinkomponente, einer von Erbsen stammenden Proteinkomponente, einer von Mais stammenden Proteinkomponente, einer von Kartoffeln stammenden Proteinkomponente, einer von Weizen stammenden Proteinkomponente, einer von Algen stammenden Proteinkomponente, einer von Pseudogetreide stammenden Proteinkomponente, einer von Hefe stammenden Proteinkomponente und Mischungen davon.

12. Veganes Lebensmittelprodukt nach einem der Ansprüche 10 bis 11,

der ein schmieregereiftes Käseanalogon ist, und/oder
das bei 20°C fest oder halbfest ist.

13. Veganes Lebensmittelprodukt nach einem der Ansprüche 10 bis 12, das eine Restschmiereschicht mit einer mittleren Dicke zwischen 0,05 mm und 0,1 mm, gemessen durch Mikroskopie, aufweist.

14. Verwendung eines blattartigen porösen Materials bei der Herstellung eines oberflächengereiften veganen Lebensmittels,

wobei das blattartige Material Poren mit einer mittleren Grösse im Bereich von 0,01 mm - 2,00 mm enthält, wobei sich die mittlere Grösse

a) im Falle einer kreisförmigen Pore auf den Durchmesser der Pore bezieht; oder
b) im Falle einer ovalen oder polygonalen Form der Pore sich auf den Abstand zwischen den am weitesten entfernten Punkten oder Ecken der Pore bezieht;

wobei das blattartige Material auf ein veganes Vorläuferlebensmittelprodukt aufgebracht wird und anschliessend Mikroorganismen darauf aufgebracht werden;
und
wobei das vegane Lebensmittelprodukt Wasser und mindestens einen der folgenden Bestandteile enthält:

• eine aus Pflanzen, Algen, Bakterien oder Pilzen gewonnene Polysaccharidkomponente, vorzugsweise in einer Menge von 5 - 75 % (w/w);
• eine aus Pflanzen, Algen, Bakterien oder Pilzen gewonnene Proteinkomponente, vorzugsweise in einer Menge von 5 - 75 % (w/w);

und gegebenenfalls zusätzlich eine aus Pflanzen, Algen, Bakterien oder Pilzen gewonnene Fettkomponente, vorzugsweise in einer Menge von 5 - 50 % (w/w).

15. Die Verwendung nach Anspruch 14, wobei das vegane Lebensmittelprodukt wie in einem der Ansprüche 10 bis 13 definiert ist; und/oder das blattartige Material eine Hülle ist, wie in einem der Ansprüche 1, 5 bis 9 definiert.


**Revendications**

1. **Un procédé pour la production d'un** produit alimentaire végétalien mûri en surface à partir d'un produit alimentaire végétalien précurseur, **caractérisée en ce que**

le procédé comprend les étapes suivantes

(a) fournir un produit alimentaire précurseur végétalien, y appliquer une enveloppe et y appliquer ensuite des micro-organismes,
ladite enveloppe

• étant en contact physique direct avec la surface du produit alimentaire végétalien précurseur, et
• étant perméable aux métabolites produits par les micro-organismes et aux micro-organismes eux-mêmes et aux composants du produit alimentaire végétalien précurseur et aux éléments gazeux, en particulier l'air ambiant ; et

(b) faire mûrir le précurseur végétalien à l'intérieur de l'enveloppe ; et
(c) retirer l'enveloppe pour obtenir le produit alimentaire végétalien ; et

dans lequel le produit alimentaire végétalien et le produit alimentaire végétalien précurseur contiennent chacun de l'eau et au moins l'un des composants suivants

• un composant polysaccharide dérivé d'une plante, d'une algue, d'une bactérie ou d'un champignon ;
• un composant protéique dérivé d'une plante, d'une algue, d'une bactérie ou d'un champignon ;

et optionnellement en outre un composant gras dérivé d'une plante, d'une algue, d'une bactérie ou d'un champignon.

2. Le procédé selon la revendication 1,
dans lequel le procédé comprend en outre (d) l'emballage du produit alimentaire végétalien pour le transport et/ou la vente.

3. Le procédé selon la revendication 1 ou 2,
dans lequel le produit alimentaire végétalien mûri en surface est un analogue de fromage mûri en surface, en particulier un analogue de fromage mûri par frottement.

4. Le procédé selon l'une des revendications 1 à 3,

dans lequel le composant polysaccharide dérivé d'une plante, d'une algue, d'une bactérie ou d'un champignon est un amidon de racine ou de tubercule, un amidon de grain, un amidon d'algue ou un mélange de ceux-ci, de préférence choisi dans le groupe constitué par l'amidon de tapioca, l'amidon de pomme de terre, l'amidon de maïs, l'agar, l'alginate et de leurs mélanges ; et
dans lequel le composant protéique est choisi dans le groupe constitué d'un composant protéique dérivé de la noix de cajou, d'un composant protéique dérivé de l'amande, d'un composant protéique dérivé du soja, d'un composant protéique dérivé du lupin, d'un composant protéique dérivé du pois, d'un composant protéique dérivé du maïs, d'un composant protéique dérivé de la pomme de terre, d'un composant protéique dérivé du blé, d'un composant protéique dérivé des algues, d'un composant protéique dérivé des pseudo-céréales, d'un composant protéique dérivé de la levure, et de leurs mélanges ; et
dans lequel le composant gras dérivé d'une plante, d'une algue, d'une bactérie ou d'un champignon est choisi dans le groupe constitué par l'huile d'avocat, l'huile de canola, le beurre de cacao, l'huile de coco, l'huile de maïs, l'huile de palme, l'huile de carthame, l'huile de sésame, l'huile de tournesol, l'huile de colza, l'huile d'algue, un composant gras dérivé de la noix de cajou, un composant gras dérivé de l'amande, un composant gras dérivé du soja, un composant gras dérivé du lupin, un composant gras dérivé du pois, un composant gras dérivé de la levure, et leurs mélanges.

5. Le procédé selon l'une des revendications 1 à 4,

dans lequel l'enveloppe contient des pores dont la taille moyenne est comprise entre 0,01 mm et 2,00 mm, la taille moyenne étant liée à

a) dans le cas d'un pore circulaire, la taille du pore se rapporte au diamètre du pore ; ou
b) dans le cas d'un pore de forme ovale ou polygonale, la taille du pore correspond à la distance entre les points ou les coins les plus éloignés du pore

mesurée par microscopie optique, de préférence selon le protocole suivant :

(i) serrer l'enveloppe dans un cadre de tentation ; et
(ii) appliquer à l'enveloppe une extension maximale dans le domaine élastique de l'enveloppe ; et
(iii) mesurer la taille d'une multitude de pores visibles sur une image microscopique de 5,8 x 5,8 mm avec un grossissement de 48 fois.

**6.** Le procédé selon l'une des revendications 1 à 5, dans lequel l'enveloppe contient des étoffes tricotées, des étoffes tissées ou des étoffes non tissées, en particulier des étoffes tricotées ou des étoffes tissées, de préférence des étoffes tricotées.

**7.** Le procédé selon l'une des revendications 1 à 6, dans lequel l'enveloppe contient des tissus tricotés ou tissés, de préférence des tissus tricotés, constitués de fils ayant une densité de masse linéaire de 5-165 DTEX, de préférence de 10-120 DTEX, plus préférentiellement de 15-100 DTEX.

**8.** Le procédé selon l'une des revendications 1 à 7,

dans lequel l'enveloppe contient des matériaux choisis dans le groupe constitué par les matériaux polymères naturels, les matériaux polymères synthétiques et leurs mélanges,
dans lequel des matériaux polymères naturels sont de préférence choisis dans le groupe constitué par la cellulose, le coton, la laine, la soie, le cachemire et leurs mélanges, et
dans lequel des matériaux polymères synthétiques sont de préférence choisis dans le groupe constitué par les dérivés de la cellulose, tels que l'acétate de cellulose et la nitrocellulose, les polyamides, les élastomères, les polyuréthanes, les polyoléfines telles que les polypropylènes, les polyesters, tels que le polyéthylène téréphtalate, les polyéthylèneglycols, les acryliques et leurs mélanges.

**9.** Le procédé selon l'une quelconque des revendications 1 à 8, dans lequel l'enveloppe comprend de la cellulose et/ou des dérivés de la cellulose, de préférence choisis parmi le modal, le micromodal et le lyocell.

**10.** **Un produit alimentaire végétalien** obtenu par le procédé décrit dans l'une des revendications 1 à 9,

dans lequel le produit alimentaire végétalien contient de l'eau, de préférence dans une proportion de 25 à 75 % (p/p) et au moins l'un des composants suivants :

• un composant polysaccharide dérivé d'une plante, d'une algue, d'une bactérie ou d'un champignon, de préférence dans une proportion de 5 à 75 % (p/p) ;
• un composant protéique dérivé d'une plante, d'une algue, d'une bactérie ou d'un champignon, de préférence dans une proportion de 5 à 75 % (p/p) ;
et optionnellement un composant gras dérivé d'une plante, d'une algue, d'une bactérie ou d'un champignon, de préférence dans une proportion de 5 à 50 % (p/p).

**caractérisé en ce que** le produit alimentaire végétalien présente une couche de salissure résiduelle d'une épaisseur moyenne comprise entre 0,05 mm et 0,2 mm, mesurée par microscopie.

**11.** Le produit alimentaire végétalien selon la revendication 10, qui respecte un ou plusieurs des critères suivants :

• le composant polysaccharide dérivé d'une plante, d'une algue, d'une bactérie ou d'un champignon est un amidon de racine, un amidon de tubercule, un amidon de grain, un amidon d'algue ou un mélange de ceux-ci, de préférence choisi dans le groupe constitué par l'amidon de tapioca, l'amidon de pomme de terre, l'amidon de maïs, l'agar, l'alginate et leurs mélanges ;
• le composant gras dérivé d'une plante, d'une algue, d'une bactérie ou d'un champignon est choisi dans le groupe constitué par l'huile d'avocat, l'huile de canola, le beurre de cacao, l'huile de coco, l'huile de maïs, l'huile de palme, l'huile de carthame, l'huile de sésame, l'huile de tournesol, l'huile de colza, l'huile d'algue, un composant gras dérivé de la noix de cajou, un composant gras dérivé de l'amande, un composant gras dérivé du soja, un composant gras dérivé du lupin, un composant gras dérivé du pois, un composant gras dérivé de la levure et leurs mélanges ;
• le composant protéique dérivé d'une plante, d'une algue, d'une bactérie ou d'un champignon est choisi dans le groupe constitué d'un composant protéique dérivé de la noix de cajou, d'un composant protéique dérivé de l'amande, d'un composant protéique dérivé du soja, d'un composant protéique dérivé du lupin, d'un composant protéique dérivé du pois, d'un composant protéique dérivé du maïs, d'un composant protéique dérivé de la pomme de terre, d'un composant protéique dérivé du blé, d'un composant protéique dérivé des algues, d'un composant protéique dérivé des pseudo-céréales, d'un composant protéique dérivé de la levure et de leurs mélanges.

**12.** Le produit alimentaire végétalien selon l'une des revendications 10 à 11,

qui est un analogue de fromage mûri, et/ou
qui est solide ou semi-solide à 20°C.

**13.** Le produit alimentaire végétalien selon l'une des revendications 10 à 12, qui présente une couche de salissure résiduelle d'une épaisseur moyenne comprise entre 0,05 mm et 0,1 mm, mesurée par microscopie.

**14. Utilisation d'un matériau poreux en forme de feuille** dans la production d'un produit alimentaire végétalien mûri en surface,

dans laquelle le matériau en forme de feuille contient des pores dont la taille moyenne est comprise entre 0,01 mm et 2,00 mm, la taille moyenne se rapportant à

a) dans le cas d'un pore circulaire, la taille du pore se rapporte au diamètre du pore ; ou
b) dans le cas d'un pore de forme ovale ou polygonale, la taille du pore correspond à la distance entre les points ou les coins les plus éloignés du pore ;

dans laquelle le matériau en forme de feuille est appliqué sur un produit alimentaire végétalien précurseur, puis des micro-organismes y sont appliqués ;
et
dans laquelle le produit alimentaire végétalien contient de l'eau et au moins l'un des composants suivants :

• un composant polysaccharide dérivé d'une plante, d'une algue, d'une bactérie ou d'un champignon, de préférence dans une proportion de 5 à 75 % (p/p) ;
• un composant protéique dérivé d'une plante, d'une algue, d'une bactérie ou d'un champignon, de préférence dans une proportion de 5 à 75 % (p/p) ;

et optionnellement en outre un composant gras dérivé d'une plante, d'une algue, d'une bactérie ou d'un champignon, de préférence dans une proportion de 5 à 50 % (w/w).

**15.** L'utilisation selon la revendication 14, dans laquelle le produit alimentaire végétalien est tel que défini dans l'une des revendications 10 à 13 ; et / ou le matériau en forme de feuille est une enveloppe telle que définie dans l'une des revendications 1, 5 à 9.

Figure 1

Figure 2

Figure 3

Figure 4

Figure 5

7        8        9        12        10        11

Figure 6

7        8        9        12        10        11

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2641545 A

- EP 3366144 A

**Non-patent literature cited in the description**

- **HOSTIN S ; PALO V**. Milchwirtsch. Ber. Bundesanst.. *Wolfpassing Rotholz*, 1992 (111), 106-109

- **GROSSMANN et al.** *Trends in Food Science and Technology*, 2021, vol. 118, 207-229
- *CHEMICAL ABSTRACTS*, 142-62-1